# EUROPÄISCHE PATENTSCHRIFT

(11) **EP 4 302 063 B1**
(45) Veröffentlichungstag und Bekanntmachung des Hinweises auf die Patenterteilung: **09.04.2025**
(21) Anmeldenummer: 22707430.9
(22) Anmeldetag: 22.02.2022
(51) Int. Cl.: G01M 11/02

(54) **VORRICHTUNG UND VERFAHREN ZUM MESSEN VON ABBILDUNGSEIGENSCHAFTEN EINES OPTISCHEN SYSTEMS**
DEVICE AND METHOD FOR MEASURING IMAGING PROPERTIES OF AN OPTICAL SYSTEM
DISPOSITIF ET PROCÉDÉ DE MESURE DES PROPRIÉTÉS D'IMAGERIE D'UN SYSTÈME OPTIQUE

(30) Priorität: 02.03.2021 DE 102021105027
(43) Veröffentlichungstag der Anmeldung: 10.01.2024
(73) Patentinhaber: Trioptics GmbH, 22880 Wedel (DE)
(72) Erfinder: POIKAT, Ralf, 22880 Wedel (DE); MILCZAREK, Albert, 22880 Wedel (DE); PETER, Frank, 22880 Wedel (DE)
(74) Vertreter: Waldauf, Alexander
(86) Internationale Anmeldenummer: PCT/EP2022/054456
(87) Internationale Veröffentlichungsnummer: WO 2022/184513

(56) Entgegenhaltungen:
- EP-A1- 3 410 091
- CN-U- 208 751 828

## Beschreibung

Die Erfindung betrifft eine Vorrichtung zum Messen von Abbildungseigenschaften eines optischen Systems, wobei die Vorrichtung umfasst: einen Prüflingshalter, welcher dazu eingerichtet ist, das zu prüfende optische System an einer vorgegebenen Prüfposition zu positionieren, eine starre Haltevorrichtung und eine Mehrzahl von MTF-Messvorrichtungen, die derart an fest vorgebbaren Positionen der Haltevorrichtung angeordnet sind, dass mit jeder der MTF-Messvorrichtungen eine Modulationstransferfunktion an jeweils voneinander verschiedenen ebenfalls fest vorgebbaren Winkellagen im Bildfeld des optischen Systems messbar ist. Ferner betrifft die Erfindung ein Verfahren zum Messen von Abbildungseigenschaften eines optischen Systems mit einer solchen Vorrichtung.

Eine Messung der Abbildungseigenschaften eines optischen Systems erfolgt vielfach im Rahmen der Qualitätskontrolle und/oder zur Charakterisierung von abbildenden optischen Systemen. Ein zu diesem Zweck weit verbreitetes Messverfahren ist die Messung der Modulationstransferfunktion (MTF), die auch Modulationsübertragungsfunktion genannt wird. MTF-Messungen werden an verschiedensten optischen Systemen durchgeführt. Sie erfolgen in großer Anzahl in der Massenfertigung von Objektiven und auch zur Charakterisierung von hochwertigen Spezialoptiken.

Ein bekanntes MTF-Prüfgerät wird unter der Bezeichnung ImageMaster^{®} PRO von der Trioptics GmbH angeboten. In den ImageMaster^{®} PRO-Geräten wird eine Mehrzahl teleskopischer Kameras eingesetzt, welche jeweils unter fest vorgegebenen Winkellagen relativ zur optischen Achse des Prüflings und in "Blickrichtung" zur Pupille des Prüflings montiert sind. Dies wird durch Verwendung eines dom- bzw. kalottenförmigen Kamerahalters erreicht, wobei die Kameras an der Innenseite dieses Doms angeordnet sind. Die Kameras dienen als MTF-Messvorrichtungen und blicken entlang ihrer optischen Achsen auf den Krümmungsmittelpunkt des Doms. Gleichzeitig sind alle teleskopischen Kameras auf die Pupille eines einzigen optischen Systems, welches als Prüfling an einer Prüfposition platziert ist, ausgerichtet. Mithilfe einer solchen Messvorrichtung können mehrere MTF-Messungen an verschiedenen Feldpositionen, repräsentiert durch die unterschiedlichen Winkellagen, im Bildfeld des zu prüfenden optischen Systems simultan vorgenommen werden. Zu diesem Zweck wird beispielsweise eine beleuchtete Strichplatte in der Bildebene des zu prüfenden optischen Systems über die jeweilige Teleskopoptik der MTF-Prüfvorrichtung auf deren Kamerasensor abgebildet.

Um die Abbildungsqualität des zu prüfenden optischen Systems mit hoher Genauigkeit zu bestimmen, ist es wünschenswert, eine hohe Messpunktdichte zu erreichen. Die Messpunktdichte korreliert direkt mit der Anzahl der eingesetzten MTF-Messvorrichtungen. Je mehr MTF-Messvorrichtungen in einem Winkelbereich der zu prüfenden abbildenden Optik positioniert werden, desto höher ist die Messpunktdichte in diesem Winkelbereich. Jede MTF-Messvorrichtung, d.h. jede einzelne Kamera einschließlich ihrer abbildenden Optik, weist jedoch eine endliche räumliche Ausdehnung auf. Aus diesem Grund kann die Messpunktdichte in einem bestehenden System nicht einfach vergrößert werden. Ist die mechanisch engste und somit dichtest mögliche Anordnung der MTF-Messvorrichtung erreicht, bei der sich die MTF-Messvorrichtungen berühren, ist auch die Grenze für die Anzahl an möglichen Messpunkten erreicht.

Eine Möglichkeit, die Anzahl von Messpunkten zu vergrößern, wäre eine Vergrößerung der Abmessungen der gesamten Messvorrichtung, wobei eine größere Anzahl von MTF-Messvorrichtungen auf einem Dom mit größerem Radius angeordnet werden könnte. Bei diesem Vorgehen, wird die Messvorrichtung jedoch schnell unhandlich groß.

Aus CN 104865047 A ist eine MTF-Messvorrichtung bekannt, deren für die MTF-Messung eingesetzten Kameras an einem schwenkbaren Dom befestigt sind. Diese Kameras sind zur Durchführung von Infinit-Messungen eingerichtet. Nach erfolgter Infinit-Messung wird der Dom geschwenkt, so dass sich die an diesem befestigten MTF-Messvorrichtungen von der zu prüfenden Optik entfernen und einen Verfahrweg freigeben. Auf diesem Verfahrweg werden auf einer flachen Halteplatte angeordnete weitere Bildsensoren in den Feldbereich der zu prüfenden Optik verbracht. Diese in einer Ebene angeordneten Kameras sind für die Durchführung einer Finit-Messung eingerichtet. Es wird also die komplette domartige Konstruktion einschließlich der Kameras schwenkbar ausgeführt, so dass nach erfolgter Finit-Messung eine Messung in endlicher Entfernung mit den weiteren Bildsensoren vorgenommen werden kann.

Zwischen der Durchführung der Infinit-Messung und der Durchführung der Finit-Messung ist es also erforderlich, die Messvorrichtung zwischen zwei Konfigurationen zu verfahren. Dies ist nur mit einem mechanisch beweglichen Aufbau möglich, der als Ganzes keine starre Haltevorrichtung darstellt. Eine Haltevorrichtung, welche bewegliche Teile umfasst, weist unweigerlich die mit beweglichen Teilen verbundenen konstruktiven Nachteile auf, die sich auf die Messgenauigkeit und -geschwindigkeit auswirken. Dies sind u. a. ein höherer konstruktiver Aufwand und geringere oder nur mit erheblichem Mehraufwand erreichbare Toleranzen und Genauigkeiten. Außerdem kann mit der bekannten Messung stets lediglich entweder eine Infinit-Messung oder eine Messung mit endlichem Abstand vorgenommen werden, eine gleichzeitige Messung mit allen verfügbaren Kameras ist konstruktiv ausgeschlossen.

Eine weitere Messvorrichtung ist aus CN 208751828 U bekannt. Diese umfasst mehrere MTF-Messvorrichtungen, die auf einem Dom angeordnet sind. Um in einem zentralen Abbildungsbereich eines zu prüfenden optischen Systems Messwerte mit hoher Dichte aufnehmen zu können, weist die Vorrichtung in endlicher Entfernung angeordnete Bildsensoren auf, mit denen im zentralen Bereich des zu prüfenden optischen Systems eine Messung durchführbar ist. Bei diesen in endlicher Entfernung angeordneten Messvorrichtungen handelt es sich um Sensoren, auf welche die prüfende Optik direkt abbildet und welche eine Bestimmung der Abbildungsqualität mit nicht näher offenbarter Technik durchführen. Während es sich bei den Kameras mit Vorsatz-Optik um MTF-Messvorrichtungen handeln könnte, ist dies mittels der Sensoren, die eine direkte Abbildung eines von dem zu prüfenden optischen System abgebildeten Testobjekts erfassen, technisch nur mit Einschränkungen möglich. Damit bei einer finiten Abbildung überhaupt ein scharfes Bild erfasst werden kann, muss der gewählte Abstand zwischen Sensor und Prüfling auf die zu prüfende Optik abgestimmt werden und eine Sensorgröße gewählt werden, mit der die komplette Prüfstruktur erfasst werden kann. Im Gegensatz zu einer Messung, die auf der Grundlage einer Abbildung im Unendlichen durchgeführt wird und bei der der Abstand zwischen Prüfling und Teleskop keine Rolle spielt, schränkt diese Bedingung den Anwendungsbereich der offenbarten Lösung stark ein.

Aus der DE 10 2015 006 015 A1 ist eine Vorrichtung zur Messung einer Abbildungseigenschaft eines optischen Systems bekannt, welche in einer Brennebene des optischen Systems ein Lichtmuster erzeugt. Die Vorrichtung umfasst eine Anordnung von N voneinander getrennten Kameras, wobei jede Kamera ein Objektiv und einen Lichtsensor aufweist, der in einer Brennebene des Objektivs angeordnet ist. Die Kameras sind derart auf einer der Lichtmustererzeugungseinrichtung gegenüberliegenden Seite angeordnet, dass jede Kamera mit ihrem Lichtsensor das unter der Mitwirkung des optischen Systems entstandene Bild von genau einem Ausschnitt des Lichtmusters erfasst. Es ist mindestens ein Strahlablenkelement derart zwischen dem optischen System und mindestens einer der Kameras angeordnet, dass es das auf die mindestens eine Kamera auftreffende Licht von einer Referenzachse der Vorrichtung, an welcher das optische System ausgerichtet ist, ablenkt.

EP 3 410 091 A1 zeigt eine Vorrichtung zum Erfassen einer Modulations-Transferfunktion und einer Zentrierung eines optischen Systems.

Es ist eine Aufgabe der Erfindung, eine Vorrichtung sowie ein Verfahren zum Messen von Abbildungseigenschaften eines optischen Systems anzugeben, welche mit geringem konstruktiven Aufwand realisierbar ist, kompakte Abmessungen aufweist und die Erfassung von MTF-Messdaten in einem zentralen Abbildungsbereich eines zu prüfenden optischen Systems mit hoher Messpunktdichte ermöglicht.

Die Aufgabe wird gelöst durch eine Vorrichtung zum Messen von Abbildungseigenschaften eines optischen Systems, wobei die Vorrichtung umfasst:
einen Prüflingshalter, welcher dazu eingerichtet ist, das zu prüfende optische System an einer vorgegebenen Prüfposition zu positionieren, eine starre Haltevorrichtung und eine Mehrzahl von MTF-Messvorrichtungen, die derart an fest vorgebbaren Positionen der Haltevorrichtung angeordnet sind, dass mit jeder der MTF-Messvorrichtungen eine Modulationstransferfunktion an jeweils voneinander verschiedenen ebenfalls fest vorgebbaren Winkellagen im Bildfeld des optischen Systems messbar ist, wobei diese Vorrichtung dadurch fortgebildet ist, dass
die Haltevorrichtung zumindest einen ersten und einen zweiten Halter umfasst und die Mehrzahl von MTF-Messvorrichtungen eine erste und eine zweite Gruppe von MTF-Messvorrichtungen umfasst, wobei
der erste Halter dazu eingerichtet ist, die MTF-Messvorrichtungen der ersten Gruppe an ersten Positionen zu halten, so dass die MTF-Messvorrichtungen der ersten Gruppe auf einer ersten Kugelschale angeordnet sind,
der zweite Halter dazu eingerichtet ist, die MTF-Messvorrichtungen der zweiten Gruppe an zweiten Positionen zu halten, so dass die MTF-Messvorrichtungen der zweiten Gruppe auf einer zweiten Kugelschale angeordnet sind, wobei
die erste und die zweite Kugelschale unterschiedliche Radien haben und konzentrisch zueinander angeordnet sind.

Unter einer starren Haltevorrichtung ist im Kontext der vorliegenden Beschreibung eine Haltevorrichtung ohne bewegliche Teile zu verstehen. Die Mehrzahl der MTF-Messvorrichtungen ist an fest vorgebbaren Positionen der Haltevorrichtung angeordnet, was bedeutet, dass sich diese während der Messwerterfassung an festen Positionen befinden und insbesondere nicht bewegt werden. Die MTF-Messvorrichtungen können, beispielsweise zum Zweck einer Justage, in ihren Positionen veränderbar, insbesondere einstellbar, an der Haltevorrichtung angebracht sein. Eine solche Veränderbarkeit kann beispielsweise realisiert sein, indem die MTF-Messvorrichtungen mit Hilfe von durch Langlöcher geführten Schrauben aufgenommen sind.

Das optische System, dessen Abbildungseigenschaften gemessen werden, ist insbesondere ein refraktives optisches System. Unter einem refraktiven optischen System wird im Kontext der vorliegenden Beschreibung ein optisches System verstanden, welches zumindest ein refraktives optisches Element umfasst, insbesondere sind alle optischen Elemente des optischen Systems refraktive optische Elemente.

Bei den MTF-Messvorrichtungen handelt es sich insbesondere um Messkameras, welche dazu eingerichtet sind, die Modulationstransferfunktion (MTF) des optischen Systems als Prüfling zu bestimmen. Hierzu sind die MTF-Messvorrichtungen mit einer geeigneten Optik ausgestattet. Die MTF-Messvorrichtungen sind insbesondere derart an der Haltevorrichtung aufgenommen, dass sich die Sichtfelder der MTF-Messvorrichtungen nicht überdecken. Mit anderen Worten sind die MTF-Messvorrichtungen so angeordnet, dass sie sich bei der Durchführung der Messungen nicht gegenseitig behindern.

Die Winkellage der MTF-Messvorrichtungen bestimmt eine Position der MTF-Messvorrichtungen im Bildfeld des zu prüfenden optischen Systems.

Vorteilhaft ist mit der Vorrichtung gemäß Aspekten der Erfindung eine simultane Vermessung der optischen Abbildungsqualität eines zu prüfenden optischen Systems auf der Grundlage von MTF-Messungen möglich, wobei eine hohe Messpunktdichte gewonnen werden kann. Die MTF-Messungen können vorteilhaft simultan durchgeführt werden, was die Charakterisierung des zu prüfenden optischen Systems mit hoher Geschwindigkeit erlaubt. Der mechanische Aufbau der Vorrichtung kommt vorteilhaft ohne bewegliche Teile aus, was der Präzision und der Geschwindigkeit der durchgeführten Messung zugutekommt. Die Vorrichtung ist außerdem sehr flexibel, denn es können mit ihr sowohl optische Systeme mit großem maximalem Sichtfeld, d.h. großem Feldwinkel (engl.: Field of View: FOV) als auch insbesondere optische Systeme mit kleinem Feldwinkel charakterisiert werden. Es ist hierzu nicht erforderlich, die Vorrichtung umzubauen, umzurüsten oder zu verfahren.

Bei den MTF-Messvorrichtungen handelt es sich beispielsweise um Kameras, welche mit einer geeigneten Endlich- oder Unendlich-Optik ausgestattet sind, so dass sie das von dem zu prüfenden optischen System abgebildete Testobjekt, beispielsweise eine Kreuzblende oder dergleichen, erfassen können. Es ist ebenso möglich, die MTF-Messvorrichtungen mit Kollimatoren auszustatten, die über die Möglichkeit der Fokussierung verfügen.

Die Vorrichtung ist insbesondere derart ausgestaltet, dass alle von der Vorrichtung umfassten MTF-Messvorrichtungen gleichartig aufgebaut sind, d.h. für die gleiche Art der Messung eingerichtet sind. Insbesondere ist vorgesehen, dass alle MTF-Messvorrichtungen eine Infinit-Messung vornehmen.

Der mechanische Aufbau der Vorrichtung der ohne bewegliche Teile auskommt, ist äußerst temperaturstabil, was insbesondere für die Massenprüfung von optischen Systemen über längere Zeiträume von Vorteil ist. Die Haltevorrichtung kann beispielsweise durch mehrere mechanisch starre Streben realisiert sein, welche den ersten und den zweiten Halter miteinander verbinden oder für diese Halter eine geeignete Haltestruktur zur Verfügungen stellen.

Bei MTF-Messvorrichtungen, wie sie aus dem Stand der Technik bekannt sind, könnte die Anzahl der erfassbaren Messpunkte, welche durch die mechanische Ausdehnung der MTF-Messvorrichtungen limitiert ist, dadurch erhöht werden, dass die MTF-Messvorrichtungen in größerem Abstand von dem zu prüfenden optischen System angeordnet werden. Dann wäre es möglich, in einem gleich großen Feldwinkel des zu prüfenden optischen Systems eine größere Anzahl von MTF-Messvorrichtungen anzuordnen. Diese Maßnahme vergrößert jedoch die Vorrichtungen zum Messen der Abbildungseigenschaften des optischen Systems erheblich. Mithilfe der erfindungsgemäßen mehrstufigen Konstruktion wird dieser Nachteil überwunden. Es wird eine Lösung bereitgestellt, bei der eine große Anzahl von Messpunkten pro Feldwinkel aufgenommen werden kann, wobei gleichzeitig die kompakten Abmessungen der Messvorrichtungen weitgehend erhalten bleiben können. In einer mehrstufigen Anordnung ist es möglich, die MTF-Messvorrichtungen so auf dem ersten und zweiten Halter anzuordnen, dass sich deren Sichtfelder nicht überschneiden. So kann mit jeder einzelnen MTF-Messvorrichtung ein entsprechender MTF-Messwert im Bildfeld des zu prüfenden optischen Systems erfasst werden.

Die Vorrichtung ist insbesondere dadurch fortgebildet, dass die MTF-Messvorrichtungen derart an der Halterung angeordnet sind, dass sich die optischen Achsen der MTF-Messvorrichtungen in einer Ebene einer Apertur bzw. Pupille des zu prüfenden optischen Systems schneiden. Insbesondere liegen ferner auch die Zentren der Kugelschalen in der Ebene der Apertur bzw. Pupille des zu prüfenden optischen Systems.

Gemäß einer weiteren vorteilhaften Ausführungsform ist die Vorrichtung dadurch fortgebildet, dass die Haltevorrichtung einen dritten Halter umfasst und die Mehrzahl von MTF-Messvorrichtungen die erste und zweite Gruppe und zusätzlich eine dritte Gruppe von MTF-Messvorrichtungen umfasst, wobei der dritte Halter dazu eingerichtet ist, die MTF-Messvorrichtungen der dritten Gruppe an dritten Positionen zu halten, so dass die MTF-Messvorrichtungen der dritten Gruppe auf einer dritten Kugelschale angeordnet sind, wobei die dritte Kugelschale einen von dem ersten und zweiten verschiedenen dritten Radius hat und konzentrisch zu der ersten und zweiten Kugelschale angeordnet ist.

Durch die Einführung einer dritten Ebene kann die Messpunktdichte pro Feldwinkel des zu prüfenden optischen Systems weiter erhöht werden. Durch die noch größere Entfernung der MTF-Messvorrichtungen von dem zu prüfenden optischen System, ist es möglich eine noch größere Zahl von MTF-Messvorrichtungen pro Feldwinkel vorzusehen.

Im Rahmen von weiteren Ausführungsformen ist es ebenfalls vorgesehen, zusätzlich zu den oben erwähnten drei Ebenen noch weitere Ebenen vorzusehen, so dass eine Vorrichtung gemäß einer solchen Ausführungsform mehr als drei Ebenen aufweist. Die Konstruktion lässt sich, so wie oben für die ersten drei Ebenen beschrieben, problemlos systematisch mit einer vierten, fünften, sechsten Ebene usw. fortsetzen, ohne dass hierzu von dem beschriebenen Konzept abweichende besondere konstruktive Maßnahmen zu ergreifen wären.

Die weiteren Ebenen werden durch weitere Halter der Haltevorrichtung bereitgestellt und sind eingerichtet, die auf der entsprechenden Ebene gehaltenen MTF-Messvorrichtungen auf einer weiteren Kugelschale angeordnet zu halten. Die Kugelschalen aller Halter sind konzentrisch zueinander angeordnet, die Zentren der Kugelschalen fallen also alle in einem Punkt zusammen.

Gemäß einer weiteren vorteilhaften Ausführungsform ist die Vorrichtung dadurch fortgebildet, dass der erste Radius der ersten Kugelschale größer ist als der zweite Radius der zweiten Kugelschale und insbesondere der zweite Radius der zweiten Kugelschale größer ist als der dritte Radius der dritten Kugelschale, so dass die MTF-Messvorrichtungen der ersten Gruppe jeweils eine größere Entfernung zu dem zu prüfenden optischen System aufweisen als die MTF-Messvorrichtungen der zweiten Gruppe und insbesondere die MTF-Messvorrichtungen der zweiten Gruppe jeweils eine größere Entfernung zu dem zu prüfenden optischen System aufweisen als die MTF-Messvorrichtungen der dritten Gruppe.

Die MTF-Messvorrichtungen der ersten Gruppe dienen dazu, eine hohe Messpunktdichte in einem zentralen Abbildungsbereich des zu prüfenden optischen Systems zu erfassen. Die MTF-Messvorrichtungen der zweiten und dritten Gruppe dienen dazu, weiter außen liegende Bereiche des Feldbereichs des zu prüfenden optischen Systems zu erfassen, also die Randbereiche des Sichtfeldes. Je nachdem wie groß der Sichtwinkel/Feldbereich des zu prüfenden optischen Systems ist, kann ebenfalls vorgesehen sein, lediglich einzelne Gruppen der MTF-Messvorrichtungen zur Charakterisierung des zu prüfenden optischen Systems heranzuziehen. Ist die Vorrichtung beispielsweise dazu eingerichtet optische Systeme mit einem Bildwinkel von 200° zu vermessen (unter Verwendung der MTF-Messvorrichtungen der ersten und der zweiten Gruppe), können optische Systeme mit einem Bildwinkel von beispielsweise bis zu 50° lediglich mit den MTF-Messvorrichtungen der ersten Gruppe vermessen werden.

Die Vorrichtung ist ferner dadurch fortgebildet, dass für alle MTF-Messvorrichtungen der ersten Gruppe ein erster Lateralwinkel zwischen einer optischen Achse des zu prüfenden optischen Systems und einer optischen Achse der MTF-Messvorrichtung kleiner ist als ein zweiter Lateralwinkel zwischen der optischen Achse des zu prüfenden optischen Systems und einer optischen Achse einer beliebigen MTF-Messvorrichtung der zweiten Gruppe und insbesondere für alle MTF-Messvorrichtungen der zweiten Gruppe ein zweiter Lateralwinkel zwischen einer optischen Achse des zu prüfenden optischen Systems und einer optischen Achse der MTF-Messvorrichtung kleiner ist als ein Lateralwinkel zwischen der optischen Achse des zu prüfenden optischen Systems und einer optischen Achse einer beliebigen MTF-Messvorrichtung der dritten Gruppe.

Die zentrale Anordnung der MTF-Messvorrichtungen der ersten Gruppe lässt sich anhand eines Winkels zwischen deren optischen Achsen und einer optischen Achse des zu prüfenden optischen Systems gut ablesen. Ein Winkelintervall, welches typischerweise die Achsen der MTF-Messvorrichtungen der zweiten Gruppe mit der optischen Achse des zu prüfenden optischen Systems einschließt, liegt oberhalb desjenigen Intervalls für die erste Gruppe.

Die erste Gruppe schließt üblicherweise eine Axiale-MTF-Messvorrichtung ein, dessen optische Achse mit der optischen Achse des zu prüfenden optischen Systems (unter der Voraussetzung idealer Orientierung des zu prüfenden optischen Systems) zusammenfällt.

Gemäß einer weiteren vorteilhaften Ausführungsform ist die Vorrichtung dadurch fortgebildet, dass ein Lateralwinkel zwischen zwei benachbart angeordneten MTF-Messvorrichtungen der ersten Gruppe, kleiner ist als ein Lateralwinkel zwischen zwei benachbart angeordneten MTF-Messvorrichtungen der zweiten Gruppe und insbesondere der zweite Lateralwinkel kleiner ist als ein dritter Lateralwinkel zwischen zwei benachbart angeordneten MTF-Messvorrichtungen der dritten Gruppe.

Die erwähnten Lateralwinkel zwischen den benachbart angeordneten MTF-Messvorrichtungen werden wie folgt bestimmt. Abhängig davon, ob es sich um MTF-Messvorrichtungen der ersten, zweiten oder dritten Gruppe handelt, wird auf der ersten, zweiten oder dritten Kugelschale ein Großkreis abgeschlagen, auf dem die benachbarten MTF-Messvorrichtungen liegen. Der Winkel wird nun in der Ebene dieses Großkreises bestimmt. In der Ebene des Großkreises liegt definitionsgemäß auch der Mittelpunkt der entsprechenden Kugelschale. Diese Definition des Lateralwinkels entspricht derjenigen, wie sie üblicherweise für einen Feldwinkel eines Bildbereichs vorgenommen wird, wobei in diesem Fall auf das zu prüfende optische System Bezug genommen wird.

Vorteilhaft können mit einer solchen Messvorrichtung MTF-Messwerte in einem zentralen Bildfeldbereich des zu prüfenden optischen Systems mit hoher Messpunktdichte gewonnen werden.

Der erste Lateralwinkel liegt, bei industrieüblichen Kameraabmessungen, insbesondere in einem Bereich zwischen 2,7° und 3,1°, ferner insbesondere in einem Bereich zwischen 2,8° und 3,0° und beträgt ferner insbesondere zumindest näherungsweise 2,9°. Der zweite Lateralwinkel liegt beispielsweise in einem Bereich zwischen 3,0° und 9°, insbesondere in einem Bereich zwischen 3,1° und 7° und beträgt ferner insbesondere zumindest näherungsweise 3,3°. Der dritte Lateralwinkel liegt beispielsweise insbesondere in einem Bereich zwischen 9° und 13°, ferner insbesondere in einem Bereich zwischen 10° und 12° und beträgt ferner insbesondere zumindest näherungsweise 11°.

Gemäß einer weiteren vorteilhaften Ausführungsform ist die Vorrichtung dadurch fortgebildet, dass sich die Halter der Haltevorrichtung zumindest abschnittsweise entlang der entsprechenden Kugelschale erstrecken.

Im Kontext der vorliegenden Beschreibung ist unter dem Begriff "sich entlang erstrecken" zu verstehen, dass sich die entsprechenden Halter der Haltevorrichtung in konstantem Abstand zu der jeweiligen Kugelschale erstrecken. Das heißt mit anderen Worten, dass die Halter nicht notwendigerweise den gleichen Radius wie die zugehörige Kugelschale aufweisen.

Gemäß einer weiteren vorteilhaften Ausführungsform ist die Vorrichtung dadurch fortgebildet, dass der erste Halter als Kugelkalotte ausgeführt ist und der zweite und/oder der dritte Halter als Kuglekalotte mit einer zentralen Öffnung ausgeführt sind/ist, wobei insbesondere der zweite und/oder der dritte Halter ringförmig sind/ist, und wobei ferner insbesondere der zweite und/oder der dritte Halter in Form einer Kugelzone ausgeführt sind/ist.

Eine Kugelzone, welche auch als Kugelschicht oder Kugelscheibe bezeichnet wird, ist Teil einer Kugeloberfläche, die von zwei parallelen Ebenen ausgeschnitten wird. Der ausgeschnittene gekrümmte Flächenanteil wird üblicherweise Kugelzone der entsprechenden Kugelschicht oder Kugelscheibe genannt. Der zweite bzw. dritte Halter ist insbesondere derart ausgestaltet, dass seine Oberfläche sich entlang einer solchen Kugelzone erstreckt. Dies erlaubt es den Kameras der nächst höheren Ebene, durch die zentrale Öffnung des darunterliegenden ringförmigen Halters hindurch zu blicken. So kann eine mechanisch stabile Halterung für die MTF-Messvorrichtungen bereitgestellt werden, ohne dass die MTF-Messvorrichtungen einander gegenseitig behindern oder den Blickwinkel einschränken.

Gemäß einer weiteren vorteilhaften Ausführungsform ist die Vorrichtung dadurch fortgebildet, dass der erste Halter als Kugelkalotte ausgeführt ist und der zweite und/oder der dritte Halter jeweils als zumindest ein Bügel ausgeführt sind/ist, wobei die Bügel jeweils an einem dem ersten Halter nahen ersten Ende an dem ersten Halter befestigt sind und sich entlang von Großkreisen der ersten bzw. zweiten Kugelschale in Richtung eines distalen freien Endes erstrecken, wobei die Großkreise innerhalb von Ebenen verlaufen, die sich entlang einer optischen Achse des zu prüfenden optischen Systems schneiden.

Eine Bügelkonstruktion des Halters erlaubt eine besonders leichte und außerdem materialsparende Konstruktion des betreffenden Halters. Außerdem kann ein Befestigungselement zwischen dem ersten Halter und dem zweiten Halter entfallen, wenn der erste und der zweite Halter direkt aneinander befestigt werden, oder es kann ein baulich kleines und somit effizient ausgestaltetes Bauteil eingesetzt werden. Die Bügel, aus dem beispielsweise der zweite Halter aufgebaut ist, können beispielweise an ihrem ersten Ende vorteilhaft direkt an dem ersten Halter befestigt werden, bei dem es sich um eine Kugelkalotte handelt. Gemäß einem bevorzugten Ausführungsbeispiel nimmt diese Kugelkalotte lediglich eine Axiale-MTF-Messvorrichtung, welche zentral in der Kugelkalotte angeordnet ist, auf. Die übrigen MTF-Messvorrichtungen sind an Bügeln aufgenommen.

Gemäß einer weiteren Ausführungsform ist die Vorrichtung dadurch fortgebildet, dass die Halter der Haltevorrichtung derart eingerichtet sind, dass eine Verschiebung der MTF-Messvorrichtungen auf der zugehörigen Kugelschale möglich ist. Die MTF-Messvorrichtungen der ersten Gruppe sind also auf der ersten Kugelschale, die MTF-Messvorrichtungen der zweiten Gruppe sind auf der zweiten Kugelschale und die MTF-Messvorrichtungen der dritten Gruppe sind auf der dritten Kugelschale verschiebbar angeordnet. Dies ist beispielsweise realisiert, indem die MTF-Messvorrichtungen unter Verwendung von Langlöchern an den Haltern befestigt sind. Die Langlöcher erstrecken sich bevorzugt entlang von Großkreisen auf den Kugelschalen.

Gemäß einer weiteren vorteilhaften Ausführungsform ist die Verbindung zwischen der Kugelkalotte und den Bügeln unter Verwendung von Langlöchern realisiert, so dass die Bügel entlang dieser bevorzugt entlang von Großkreisen verlaufenden Langlöcher verschoben werden können. Dies erlaubt eine flexible Anpassung der Feldwinkel der Vorrichtung an die gegebene Messaufgabe.

Die Großkreise verlaufen ferner bevorzugt in Ebenen, die sich in einer gemeinsamen Achse schneiden. Diese Achse fällt bevorzugt mit der optischen Achse des zu prüfenden optischen Systems zusammen.

Die Aufgabe wird ferner gelöst durch ein Verfahren zum Messen von Abbildungseigenschaften eines optischen Systems mit einer Vorrichtung gemäß einem oder mehreren der zuvor genannten Ausführungsformen. Das erfindungsgemäße Verfahren umfasst die Schritte: Anordnen des zu prüfenden optischen Systems in dem Prüflingshalter und simultanes Durchführen von MTF-Messungen mit allen MTF-Messvorrichtungen.

Vorteilhaft erlaubt dieses Verfahren eine sehr schnelle Charakterisierung des zu prüfenden optischen Systems, da die MTF-Messungen alle simultan durchgeführt werden können. Das Verfahren ist ferner sehr flexibel, denn es können sowohl optische Systeme mit großem Feldwinkel als auch optische Systeme mit kleinem Feldwinkel auf ein und derselben Vorrichtung charakterisiert werden.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1 und 2: jeweils eine schematische und vereinfachte perspektivische Ansicht einer Vorrichtung zum Messen von Abbildungseigenschaften eines optischen Systems gemäß einem ersten Ausführungsbeispiel,
- Fig. 3: eine Ansicht dieser Vorrichtung von der Unterseite her,
- Fig. 4: eine Seitenansicht dieser Vorrichtung,
- Fig. 5: eine Draufsicht auf diese Vorrichtung,
- Fig. 6 und 7: jeweils eine schematische und vereinfachte perspektivische Ansicht einer Vorrichtung zum Messen von Abbildungseigenschaften eines optischen Systems gemäß einem zweiten Ausführungsbeispiel,
- Fig. 8: eine Ansicht dieser Vorrichtung von der Unterseite her,
- Fig. 9: eine erste Seitenansicht dieser Vorrichtung und
- Fig. 10: eine weitere Seitenansicht dieser Vorrichtung, wobei lediglich einige der MTF-Messvorrichtungen dargestellt sind,
- Fig. 11: eine Draufsicht auf die Vorrichtung gemäß dem zweiten Ausführungsbeispiel,
- Fig. 12 und 13: jeweils eine schematische und vereinfachte perspektivische Ansicht einer Vorrichtung zum Messen von Abbildungseigenschaften eines optischen Systems gemäß einem dritten Ausführungsbeispiel,
- Fig. 14: eine Draufsicht auf diese Vorrichtung,
- Fig. 15: eine Ansicht von der Unterseite auf dieses System,
- Fig. 16: eine schematische und vereinfachte perspektivische Detailansicht dieses Systems, wobei lediglich einige der MTF-Messvorrichtungen dargestellt sind,
- Fig. 17: eine schematische und vereinfachte Schnittansicht einer Vorrichtung zum Messen von Abbildungseigenschaften eines optischen Systems gemäß einem vierten Ausführungsbeispiel

In den Zeichnungen sind jeweils gleiche oder gleichartige Elemente und/oder Teile mit denselben Bezugsziffern versehen, so dass von einer erneuten Vorstellung jeweils abgesehen wird.

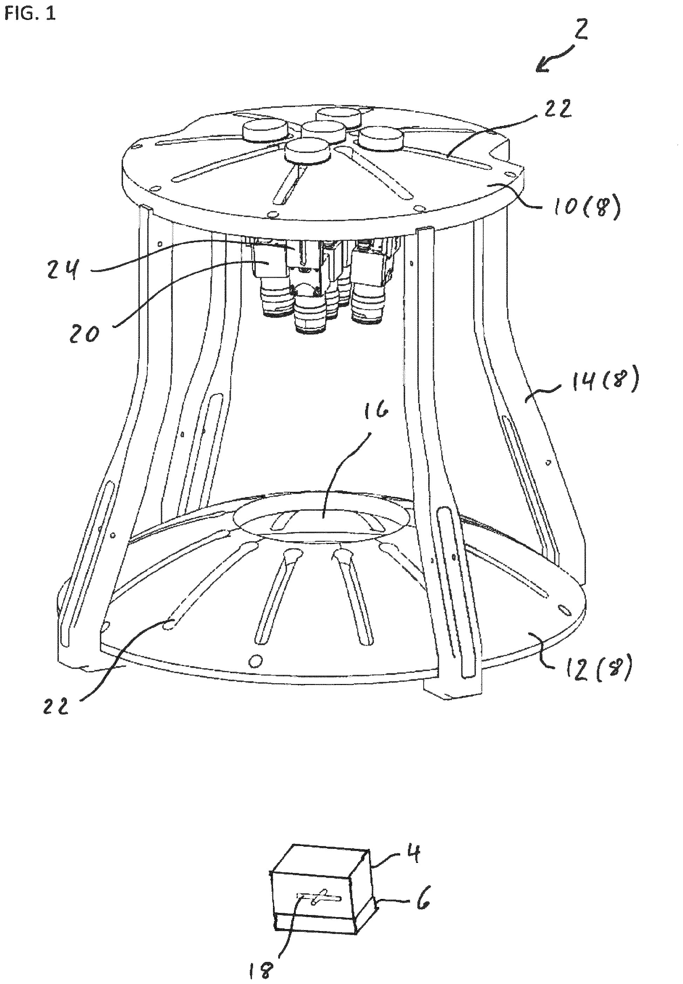

Fig. 1 zeigt eine schematische und vereinfachte perspektivische Ansicht einer Vorrichtung 2 zum Messen von Abbildungseigenschaften eines optischen Systems 4. Das optische System 4 ist insbesondere ein refraktives optisches System 4. Lediglich beispielhaft wird in der folgenden Beschreibung auf eine solches refraktives optisches System 4 Bezug genommen. Das refraktive optische System 4 ist stark schematisiert dargestellt, es handelt sich beispielsweise um eine abbildende Optik, wie ein Objektiv oder dergleichen. Die Vorrichtung 2 umfasst einen Prüflingshalter 6, der dazu eingerichtet ist, das zu prüfende optische System 4 an einer vorgegebenen Prüfposition zu positionieren. Die Vorrichtung 2 umfasst ferner eine starre Haltevorrichtung 8, welche im dargestellten Ausführungsbeispiel einen ersten Halter 10, einen zweiten Halter 12 sowie die beiden Halter 10, 12 verbindende Streben 14, von denen aus Gründen der Übersichtlichkeit lediglich eine mit Bezugszeichen versehen ist, umfasst. Beispielhaft ist der erste Halter 10 als Kugelkalotte (auch als Dom bezeichnet) ausgeführt. Der zweite Halter ist ringförmig, wobei er ebenfalls als Kugelkalotte ausgeführt ist, jedoch eine zentrale Öffnung 16 aufweist. Der zweite Halter 12 ist als Kugelzone ausgeführt, das heißt, seine Oberflächen erstrecken sich entlang zweier konzentrischer Kugelzonen. Auch der erste Halter 10 erstreckt sich entlang einer ersten Kugelschale, welche jedoch im Vergleich zu einer zweiten Kugelschale, entlang derer sich der zweite Halter 12 erstreckt, einen größeren Radius aufweist. Die erste Kugelschale und die zweite Kugelschale sind konzentrisch zueinander angeordnet. Die Zentren dieser beiden Kugelschalen liegen an dem mit einem Kreuz in Fig. 1 markierten Kugelzentrum 18. Dieses Kugelzentrum 18 liegt bevorzugt in der Ebene einer Apertur des zu prüfenden optischen Systems 4.

An der Haltevorrichtung 8 ist eine Mehrzahl von MTF-Messvorrichtungen 20 befestigt. Die MTF-Messvorrichtungen 20, von denen aus Gründen der Übersichtlichkeit lediglich eine mit Bezugszeichen versehen ist, sind beispielsweise Kameras, die mit einer geeigneten Optik ausgestattet sind. Die MTF-Messvorrichtungen 20 sind derart an der Haltevorrichtung 8 befestigt, dass sie sich in einer fest vorgebbaren Position an der Haltevorrichtung 8 befinden. Mit jeder der MTF-Messvorrichtungen 20 kann eine Modulationstransferfunktion (MTF) an einer fest vorgebbaren Winkellage im Bildfeld des optischen Systems 4 gemessen werden.

Die Haltevorrichtung 8 ist starr, das heißt, sie weist keine beweglichen Teile auf. Die MTF-Messvorrichtungen 20 befinden sich an festen Positionen. Sie können jedoch, beispielsweise im Rahmen einer anfänglichen Justage der Vorrichtung 2, flexibel positioniert werden. Zu diesem Zweck weist der erste Halter Langlöcher 22 auf, entlang derer die MTF-Messvorrichtungen 20 verschoben werden können. Die MTF-Messvorrichtungen 20 werden über Rändelschrauben fixiert, die auf der Oberseite des ersten Halters 10 sichtbar sind. Die Langlöcher 22 erstrecken sich vorzugsweise entlang von Großkreisen der ersten Kugelschale, entlang derer sich der erste Halter 10 erstreckt.

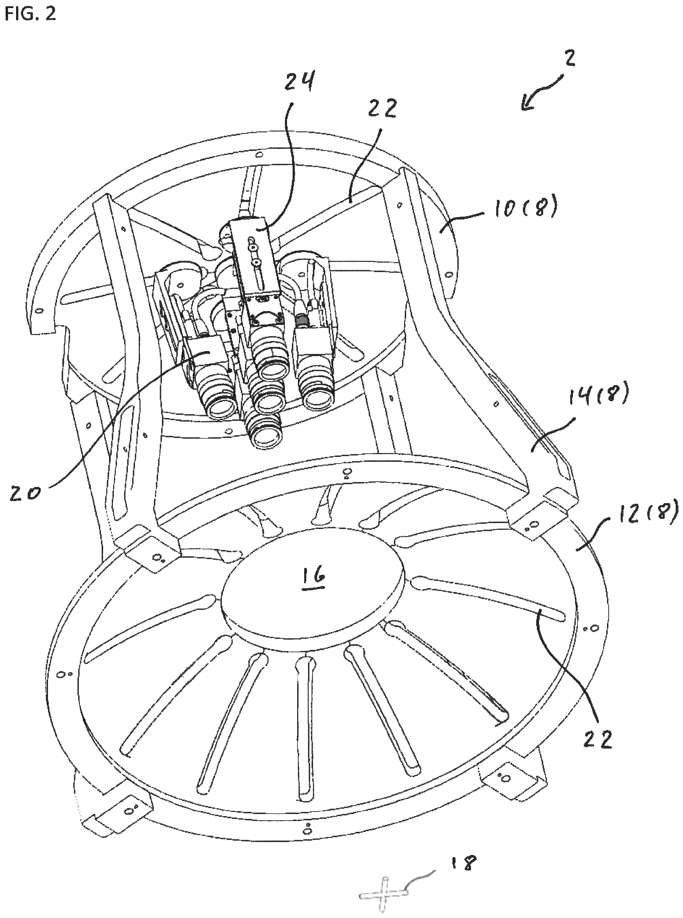

Die Vorrichtung 2 ist zur Aufnahme einer Mehrzahl von MTF-Messvorrichtungen 20 eingerichtet. Diese Mehrzahl von MTF-Messvorrichtungen 20 wird in eine erste und in eine zweite Gruppe von MTF-Messvorrichtungen 20 eingeteilt. Die erste Gruppe der MTF-Messvorrichtungen 20 ist an dem ersten Halter 10 befestigt. Diese erste Gruppe ist in Fig. 1 dargestellt. Eine zweite Gruppe von MTF-Messvorrichtungen 20, die in Fig. 2 nicht dargestellt ist, wird an dem zweiten Halter 12 befestigt. Für diese MTF-Messvorrichtungen 20 gilt das Gleiche, was zuvor im Hinblick auf die MTF-Messvorrichtungen 20 der ersten Gruppe gesagt wurde. Sie befinden sich an fest vorgebbaren Positionen. Es ist jedoch möglich, ihre Position zu justieren. Zu diesem Zweck weist auch der zweite Halter 12 Langlöcher 22 auf, von denen wiederum aus Gründen der Übersichtlichkeit lediglich eines mit Bezugszeichen versehen ist. Die Langlöcher 22 des zweiten Halters 12 erstrecken sich bevorzugt entlang von Großkreisen der zweiten Kugelschale, entlang derer sich der zweite Halter 12 erstreckt. Ähnlich wie dies für die von dem ersten Halter 10 gehaltenen MTF-Messvorrichtungen 20 in Fig. 1 gezeigt ist, befinden sich die MTF-Messvorrichtungen 20 der zweiten Gruppe in Fig. 1 unterhalb des zweiten Halters 12. Die MTF-Messvorrichtungen 20 der ersten und der zweiten Gruppe sind derart an dem ersten bzw. zweiten Halter 10, 12 angeordnet, dass sich die optischen Achsen der MTF-Messvorrichtungen 20 in dem Kugelzentrum 18 schneiden. Mit anderen Worten sind die MTF-Messvorrichtungen 20 also derart an der Halterung 8 angebracht, dass sich ihre optischen Achsen in einer Ebene der Apertur des zu prüfenden optischen Systems 4 schneiden.

Die MTF-Messvorrichtung 20 der ersten Gruppe sind auf einer ersten Kugelschale angeordnet, was bedeutet, dass insbesondere die Sensoren der als MTF-Messvorrichtung 20 eingesetzten Kameras sich innerhalb dieser ersten Kugelschale befinden. Der erste Halter 10 erstreckt sich entlang dieser ersten Kugelschale, was jedoch nicht bedeutet, dass der Halter 10 innerhalb dieser Kugelschale mit gleichem Radius verläuft. Der erste Halter 10 erstreckt sich in konstantem Abstand zu dieser ersten Kugelschale, so dass die gewünschte Anordnung der ersten Gruppe der MTF-Messvorrichtungen 20 bereitgestellt werden kann. Diese Konstruktion erlaubt es, für die Aufnahme der MTF-Messvorrichtungen 20 einfache Kamerahalter 24 zu verwenden, welche die durch die domartige Konstruktion des ersten Halters 10 vorgegebene Richtungsorientierung beibehalten und die MTF-Messvorrichtung 20 lediglich radial weiter innenliegend, also näher an dem optischen System 4, positionieren. Gleiches gilt für die Aufnahme der MTF-Messvorrichtungen 20 der zweiten Gruppe, die in Fig. 1 nicht dargestellt sind.

Die MTF-Messvorrichtungen 20 der ersten Gruppe sind dazu eingerichtet, MTF-Messungen in einem zentralen Bereich des Bildfelds des optischen Systems 4 durchzuführen. Da diese MTF-Messvorrichtungen 20 mit größerem Abstand zu dem zu prüfenden optischen System 4 angeordnet sind, können im Vergleich zur zweiten Gruppe mehr MTF-Messvorrichtungen 20 pro Feldwinkel des optischen Systems 4 angeordnet werden. Dies bedeutet, dass in einem zentralen Bereich des Bildfelds des optischen Systems 4 MTF-Messwerte mit höherer Messpunktdichte erfasst werden können. Gleichzeitig ist es mit der Vorrichtung 2 möglich, einen großen Feldwinkel bei der MTF-Messung abzudecken, MTF-Messungen unter großen Feldwinkeln können mit den MTF-Messvorrichtungen 20 der zweiten Gruppe vorgenommen werden. Dies erlaubt die Prüfung von optischen Systemen 4, welche einen großen Bild- bzw. Feldwinkel aufweisen, wobei das gesamte Bildfeld des optischen Systems 4 geprüft werden kann. Gleichzeitig können mit der Vorrichtung 2 auch optische Systeme 4 geprüft werden, welche einen kleinen Feldwinkel aufweisen, wie beispielsweise Teleobjektive. Es ist vorteilhaft nicht erforderlich, zwischen der Prüfung beispielsweise eines Weitwinkelobjektivs mit großem Feldwinkel und einem Teleobjektiv mit kleinem Feldwinkel die Vorrichtung 2 umzubauen. Es ist auch möglich, dass beispielsweise zur Prüfung von Teleobjektiven lediglich die MTF-Messvorrichtungen 20 der ersten Gruppe verwendet werden. Vorteilhaft sind die MTF-Messvorrichtungen 20 zu diesem Zweck so angeordnet, dass sich deren Bildbereiche nicht überschneiden. Die MTF-Messvorrichtungen 20 der ersten Gruppe blicken bei der Messung durch die in dem zweiten Halter 12 vorhandene zentrale Öffnung 16 hindurch. Gleichzeitig sind die in Fig. 1 nicht dargestellten MTF-Messvorrichtungen 20 der zweiten Gruppe so angeordnet, dass sie das Bildfeld der MTF-Messvorrichtungen 20 der ersten Gruppe nicht behindern.

Fig. 2 zeigt die bereits aus Fig. 1 bekannte Vorrichtung 2 in einer weiteren schematischen und vereinfachten perspektivischen Ansicht. Das zu vermessende refraktive optische System 4 und der Prüflingshalter 6 sind in Fig. 2 aus Gründen der Übersichtlichkeit nicht dargestellt, es ist lediglich das Kugelzentrum 18 angedeutet, welches in der Ebene der Prüflingsapertur liegt. Fig. 2 zeigt die Vorrichtung 2 mit Blickrichtung von der Unterseite her. Es ist gut zu erkennen, wie die MTF-Messvorrichtungen 20 an entsprechenden Kamerahaltern 24 an dem ersten Halter 10 aufgenommen sind. Die dargestellten MTF-Messvorrichtungen 20 der ersten Gruppe blicken durch die Öffnung 16 des zweiten Halters 12 hindurch auf das zu prüfenden optische System 4. Die optischen Achsen der MTF-Messvorrichtungen 20 schneiden sich in dem Kugelzentrum 18.

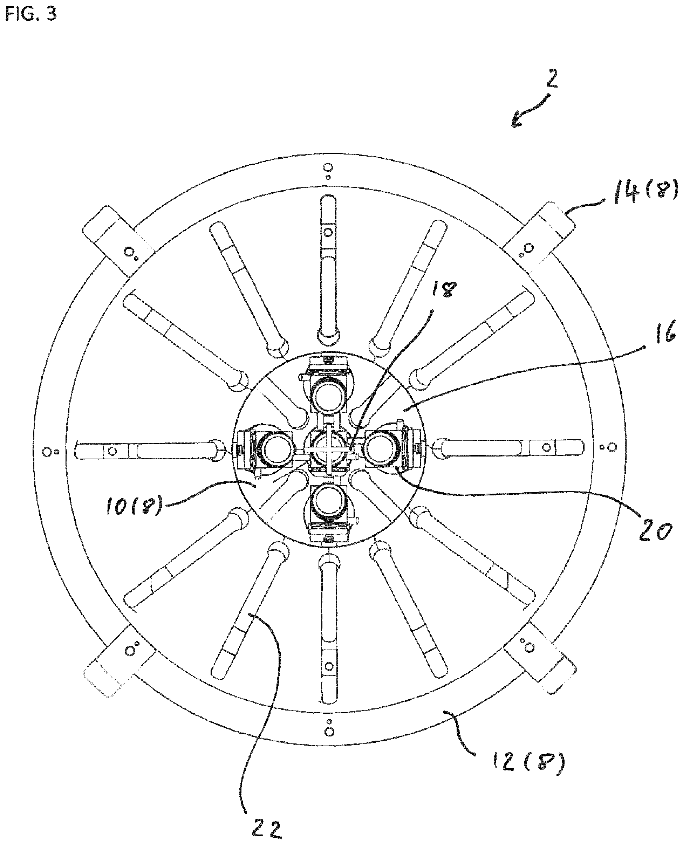

Fig. 3 zeigt eine Ansicht der Vorrichtung 2 mit Blick auf deren Unterseite. Sichtbar sind die MTF-Messvorrichtungen 20 der ersten Gruppe, welche auf das Kugelzentrum 18 blicken. Eine zentrale MTF-Messvorrichtung 20 dient zur Durchführung einer On-Axis-Messung, die vier um diese herum gruppierten MTF-Messvorrichtungen 20 führen Off-Axis-MTF-Messvorrichtungen durch. Aus Gründen der Übersichtlichkeit ist das zu prüfende optische System 4 erneut nicht dargestellt.

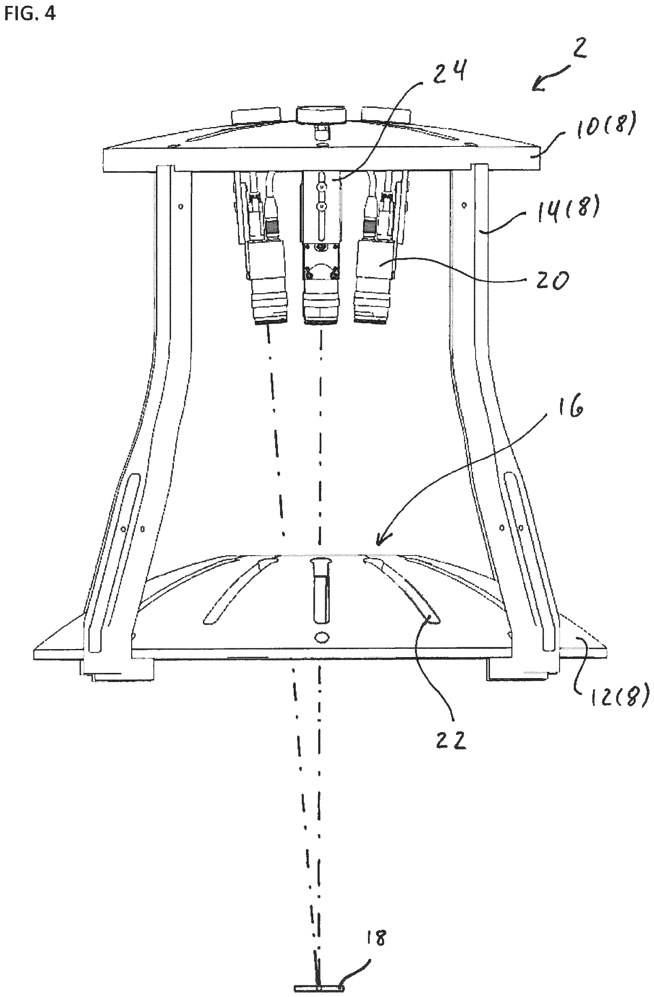

Fig. 4 zeigt die Vorrichtung 2 in einer schematischen und vereinfachten Seitenansicht. Auch in dieser Figur ist aus Gründen der Übersichtlichkeit das optische System 4 nicht dargestellt. Die optische Achse der zentralen MTF-Messvorrichtung 20 zur Durchführung der On-Axis-Messung ist in strichpunktierter Linie gezeigt, ebenso die optische Achse einer MTF-Messvorrichtung 20 zur Durchführung der Off-Axis-Messung. Die optische Achse der On-Axis-MTF-Messvorrichtung 20 fällt mit der optischen Achse des zu prüfenden (nicht dargestellten) optischen Systems 4 zusammen.

**In** der Seitenansicht ist gut erkennbar, dass der erste Radius der ersten Kugelschale, in welcher die MTF-Messvorrichtungen 20 der ersten Gruppe angeordnet sind, größer ist als der zweite Radius, in der die in Fig. 4 nicht dargestellten MTF-Messvorrichtungen 20 der zweiten Gruppe angeordnet werden können. Dies ergibt sich unmittelbar aus einem Vergleich der unterschiedlichen Krümmungsradien des ersten Halters 10 und des zweiten Halters 12.

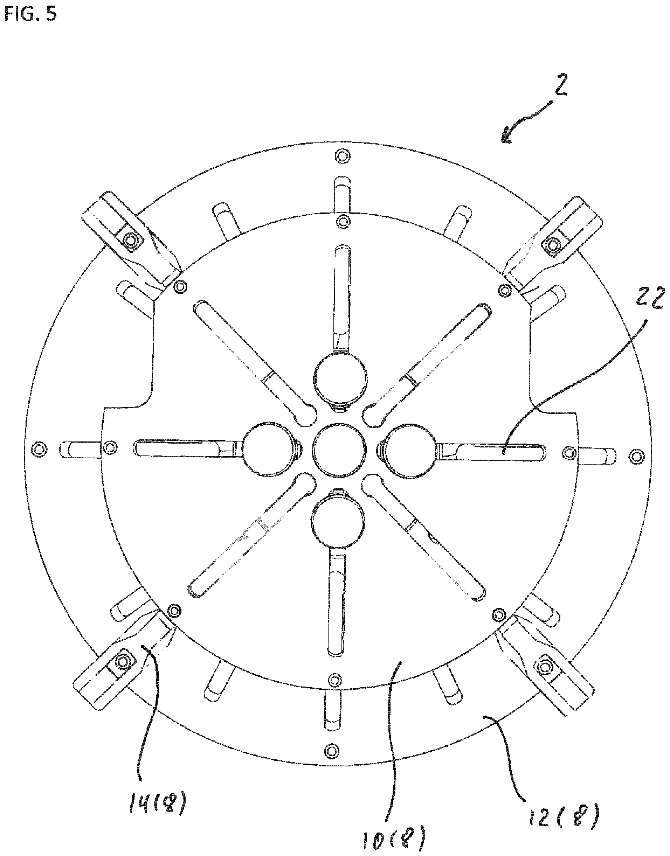

Fig. 5 zeigt die Vorrichtung 2 in einer schematisch vereinfachten Draufsicht. **In** der gezeigten Draufsicht sind die in Lateralrichtung kompakten Abmessungen der Messvorrichtung 2 erkennbar. Der erste Halter 10 und der zweite Halter 12 weisen nur geringfügig unterschiedliche Durchmesser auf (vgl. auch Fig. 4), wobei die maximalen Abmessungen durch die Haltevorrichtung 8 bestimmt sind.

Außerdem ist in Fig. 5 sichtbar, dass entlang der Hauptachsen orientierte Langlöcher 22 des ersten Halters 10 und des zweiten Halters 12 miteinander fluchten. Dies sind die sich in Fig. 5 horizontal bzw. vertikal erstreckenden Langlöcher 22. Zur Vergrößerung der Messpunktdichte könnten die im dargestellten Ausführungsbeispiel nicht verwendeten Langlöcher 22, welche entlang der 45°-Teilung zwischen der Horizontalen und der Vertikalen verlaufen, mit zusätzlichen MTF-Messvorrichtungen 20 besetzt werden. Diesbezüglich ist die Vorrichtung 2 flexibel und kann an die jeweils gewünschte Messaufgabe angepasst werden.

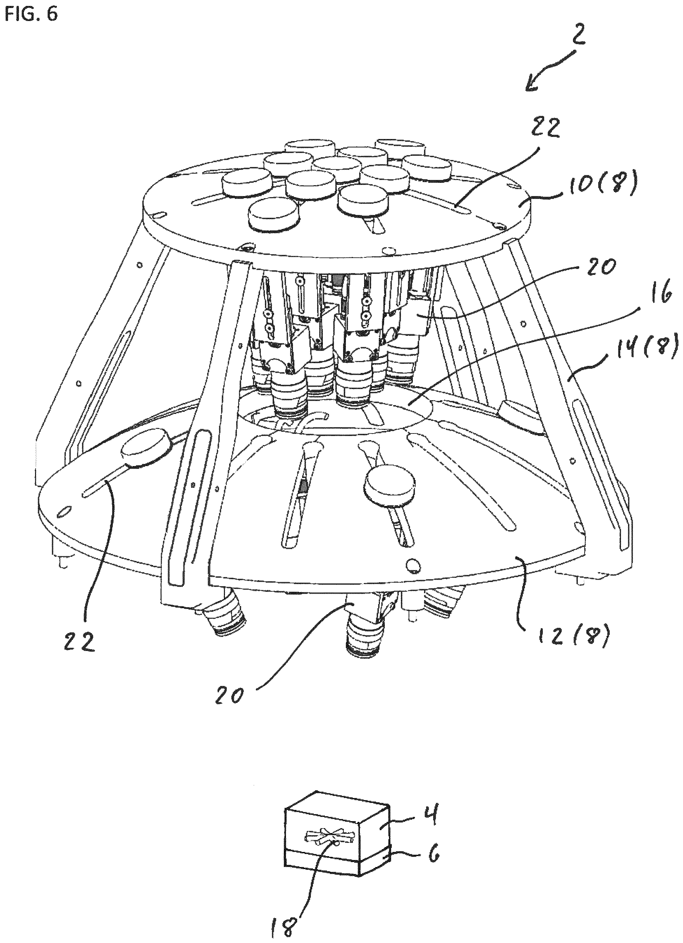

Fig. 6 zeigt eine schematische und vereinfachte perspektivische Ansicht einer Vorrichtung 2 zum Messen von Abbildungseigenschaften eines refraktiven optischen Systems 4, gemäß einem weiteren Ausführungsbeispiel. Erneut ist das optische System 4 stark schematisiert dargestellt. Es ist auf einem Prüflingshalter 6 angeordnet, mit dem das optische System 4 an einer vorgegebenen Prüfposition positioniert wird. Auch in Fig. 6 ist das Kugelzentrum 18 dargestellt, welches bevorzugt in einer Ebene der Apertur des zu prüfenden optischen Systems 4 liegt.

Die gezeigte Vorrichtung 2 umfasst wiederum einen kugelkalotten- bzw. domförmigen ersten Halter 10, welcher gemeinsam mit einem ringförmigen, ansonsten aber auch kugelkalotten- bzw. domförmig ausgestalteten zweiten Halter 12 und den diese verbindenden Streben 14 eine Haltevorrichtung 8 für die MTF-Messvorrichtungen 20 dieser Vorrichtung 2 bildet. Der zweite Halter 12 umfasst wiederum eine zentrale Öffnung 16, durch welche die MTF-Messvorrichtungen 20 der ersten Gruppe hindurchblicken. In dem gezeigten Ausführungsbeispiel sind auch MTF-Messvorrichtungen 20 der zweiten Gruppe dargestellt, welche an dem zweiten Halter 12 aufgenommen sind.

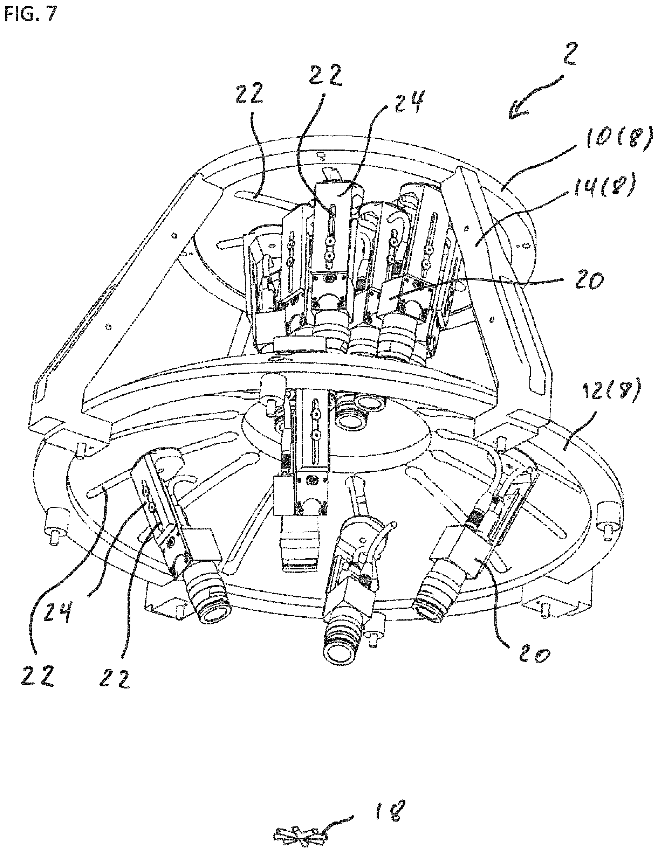

Fig. 7 zeigt die aus Fig. 6 bekannte Vorrichtung 2 in einer weiteren perspektivischen Darstellung, in diesem Fall mehr von ihrer Unterseite her. Gut sichtbar sind die MTF-Messvorrichtungen 20 der zweiten Gruppe, deren optische Achsen ebenso wie die optischen Achsen der MTF-Messvorrichtungen 20 der ersten Gruppe sich im Kugelzentrum 18 schneiden. Die MTF-Messvorrichtungen 20 der zweiten Gruppe erlauben die Durchführung von MTF-Messungen an dem zu prüfenden optischen System 4 unter einem großen Feldwinkel. Ebenfalls gut erkennbar ist die durch die große Anzahl der MTF-Messvorrichtungen 20 der ersten Gruppe bereitgestellte hohe Messpunktdichte in einem zentralen Bildbereich des optischen Systems 4. Ebenfalls in Fig. 7 gut sichtbar ist die Aufnahme der MTF-Messvorrichtungen 20 sowohl der ersten als auch der zweiten Gruppe mit entsprechenden Kamerahaltern 24. Diese versetzen, wie bereits zuvor erwähnt, die MTF-Messvorrichtungen 20 radial nach innen, so dass die MTF-Messvorrichtungen 20 der ersten Gruppe auf der ersten Kugelschale und die MTF-Messvorrichtungen 20 der zweiten Gruppe auf einer zweiten Kugelschale mit zweitem Radius angeordnet sind. Der erste Radius ist erkennbar größer als der zweite Radius der zweiten Kugelschale.

Die MTF-Messvorrichtungen 20 sind an fest vorgebbaren Positionen an der Haltevorrichtung 8 angebracht. Zum Zweck der Justage können diese jedoch entlang der Langlöcher 22 verschoben werden. In ähnlicher Weise können auch die radialen Abstände der MTF-Messvorrichtungen 20 entlang der Kamerahalter 24 verändert werden. Zu diesem Zweck weisen diese ebenfalls Langlöcher 22 auf.

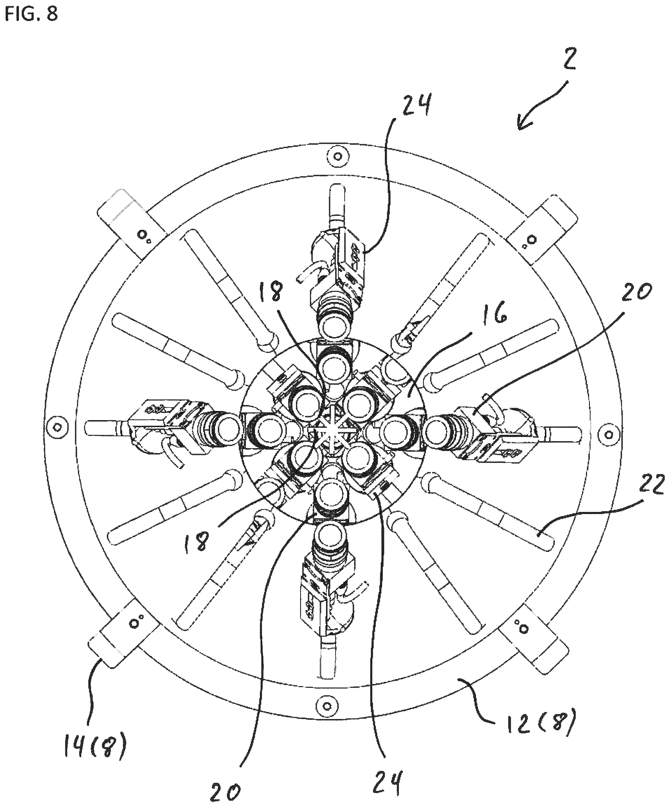

Fig. 8 zeigt die aus den Fig. 6 und 7 bekannte Vorrichtung 2 von ihrer Unterseite her. Aus Gründen der Übersichtlichkeit ist das zu prüfende optische System 4 wiederum nicht dargestellt, es ist lediglich das Kugelzentrum 18 gezeigt. Die MTF-Messvorrichtungen 20 der ersten Gruppe blicken durch die Öffnung 16 des zweiten Halters 12. Ihre erkennbar dichtere Anordnung sorgt für die hohe Messpunktdichte im zentralen Bildbereich des zu prüfenden optischen Systems 4.

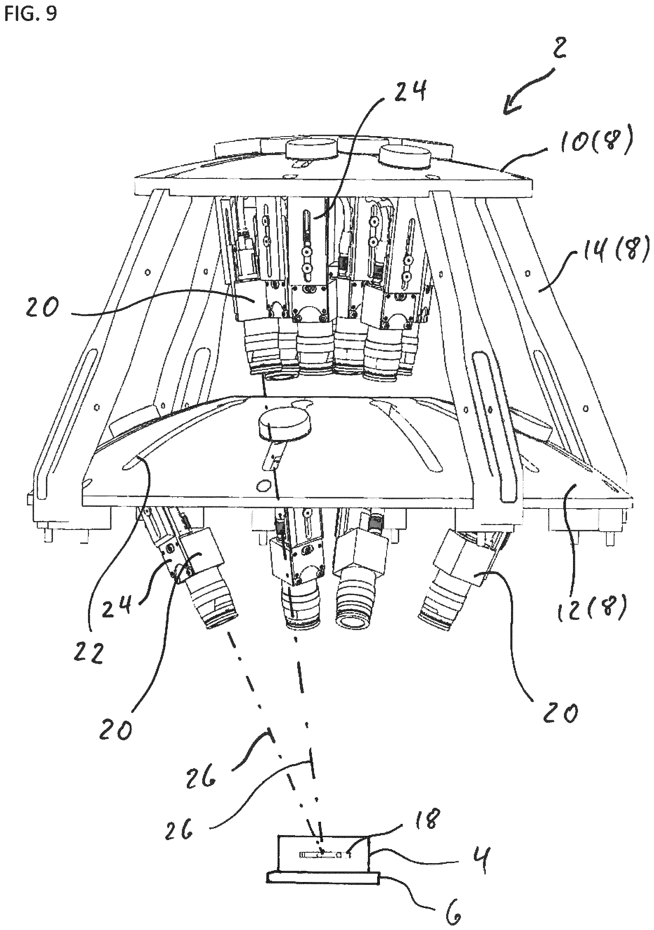

Fig. 9 zeigt die Vorrichtung 2 gemäß dem zweiten Ausführungsbeispiel in einer schematisch vereinfachten Seitenansicht. Gut sichtbar ist, dass die MTF-Messvorrichtungen 20 der ersten Gruppe auf einer ersten Kugelschale mit größerem Radius angeordnet sind als die MTF-Messvorrichtungen 20 der zweiten Gruppe (gehalten von dem zweiten Halter 12), die auf einer zweiten Kugelschale mit geringerem Radius angeordnet sind. Beispielhaft ist für eine MTF-Messvorrichtung 20 der ersten Gruppe mit strichpunktierter Linie deren optische Achse 26 eingezeichnet. Auch für eine MTF-Messvorrichtung 20 der zweiten Gruppe ist beispielhaft eine optische Achse 26 in strichpunktierter Linie angegeben. Die optischen Achsen 26 aller MTF-Messvorrichtungen treffen sich in dem Kugelzentrum 18, welches beispielhaft in der Apertur des zu prüfenden optischen Systems 4 liegt.

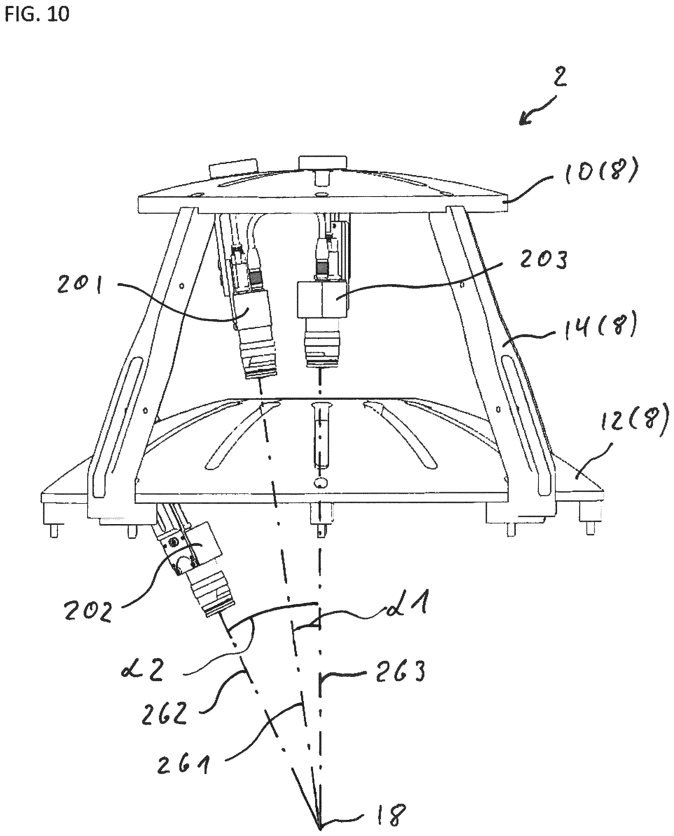

Fig. 10 zeigt eine schematisch vereinfachte Seitenansicht der Vorrichtung 2 gemäß dem zweiten Ausführungsbeispiel, wobei lediglich eine On-Axis-MTF-Messvorrichtung 203, eine der MTF-Messvorrichtungen 201 der ersten Gruppe und eine MTF-Messvorrichtung 202 der zweiten Gruppe dargestellt sind. Die jeweiligen optischen Achsen 263, 261 und 262 treffen sich in dem Kugelzentrum 18. Die optische Achse 263 der On-Axis-MTF-Messvorrichtung 203 entspricht einer optischen Achse des nicht dargestellten, zu prüfenden optischen Systems 4.

Ein erster Lateralwinkel α1 zwischen der optischen Achse 263 des zu prüfenden optischen Systems 4 und der optischen Achse 261 der MTF-Messvorrichtung 201 der ersten Gruppe ist kleiner als ein zweiter Lateralwinkel α2, gemessen zwischen der optischen Achse 263 des zu prüfenden optischen Systems 4 und der optischen Achse 262 der MTF-Messvorrichtung 202 der zweiten Gruppe. Dies gilt für alle MTF-Messvorrichtungen 201 der ersten Gruppe, welche jeweils mit der optischen Achse 263 des zu prüfenden optischen Systems 4 einen kleineren Lateralwinkel einschließen als eine beliebige MTF-Messvorrichtung 202 der zweiten Gruppe. Dies bedeutet mit anderen Worten, dass die MTF-Messvorrichtungen 201 der ersten Gruppe dazu eingerichtet sind, Messwerte in einem zentralen Abbildungsbereich des zu prüfenden optischen Systems 4 zu erfassen.

Außerdem gilt, dass ein weiterer Lateralwinkel zwischen zwei benachbart angeordneten MTF-Messvorrichtungen 201 der ersten Gruppe stets kleiner ist, als ein Lateralwinkel zwischen zwei benachbart angeordneten MTF-Messvorrichtungen 202 der zweiten Gruppe. Dies bedeutet mit anderen Worten, dass die MTF-Messvorrichtungen der ersten Gruppe dichter beieinander angeordnet sind als diejenigen der zweiten Gruppe.

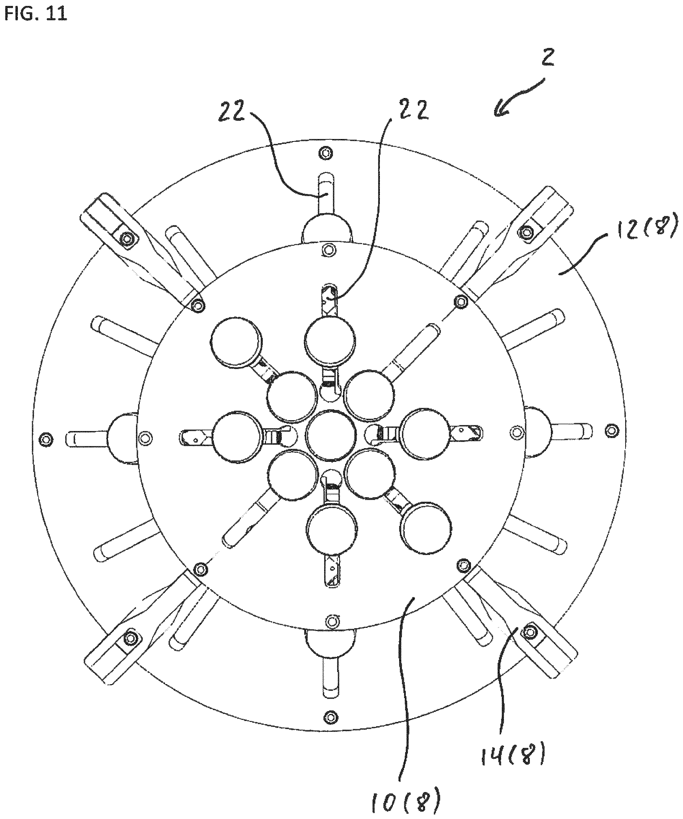

Fig. 11 zeigt die Vorrichtung 2 gemäß dem zweiten Ausführungsbeispiel in einer schematisch vereinfachten Draufsicht. Auch in dieser Ansicht ist die höhere Dichte der MTF-Messvorrichtungen 20 der ersten Gruppe, erkennbar an deren rückseitig vorhandenen Befestigungselementen, bei denen es sich beispielsweise um Rändelschrauben handelt, welche jeweils auf der Oberseite des ersten bzw. zweiten Halters 10, 12 vorhanden sind, erkennbar. Die Anordnung der MTF-Messvorrichtungen 20 ist lediglich beispielhaft, deren Dichte kann durch Hinzufügen und/oder Entfernen entsprechender MTF-Messvorrichtungen 20 an dem ersten und/oder zweiten Halter 10, 12 in der ersten oder zweiten Gruppe erhöht oder verringert werden. Eine solche Anpassung der Vorrichtung 2 kann je nach Messaufgabe flexibel erfolgen, wobei für die jeweilige Messaufgabe die MTF-Messvorrichtungen 20 wiederum an fest vorgegebenen Positionen verbleiben. Zur flexiblen Montage der MTF-Messvorrichtungen 20 sind Langlöcher 22 in dem ersten und zweiten Halter 10, 12 vorgesehen. Entlang der in Fig. 10 horizontal und vertikal verlaufenden Richtungen können die Langlöcher 22 des ersten und des zweiten Halters 10, 12 wiederum miteinander fluchtend angeordnet sein.

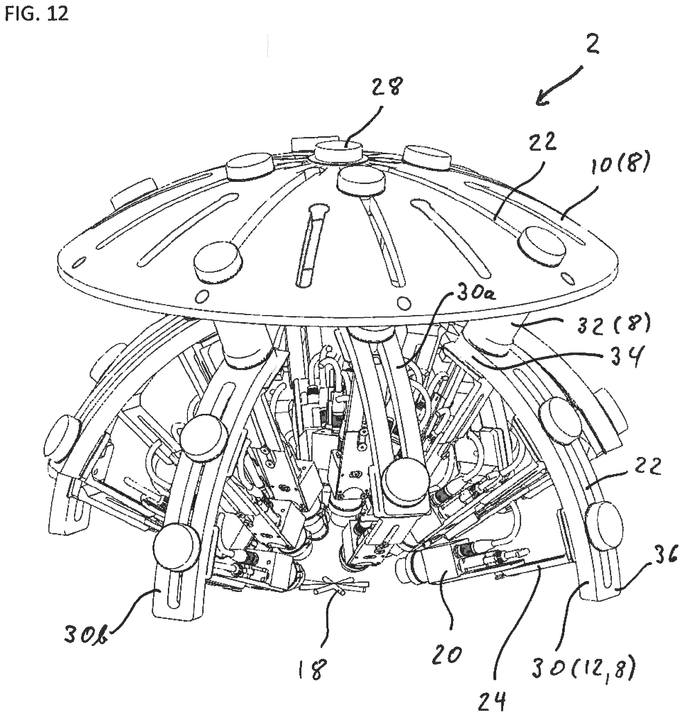

Fig. 12 zeigt in einer schematischen und vereinfachten perspektivischen Ansicht eine Vorrichtung 2 zum Messen von Abbildungseigenschaften eines refraktiven optischen Systems 4 gemäß einem dritten Ausführungsbeispiel. Die Vorrichtung 2 umfasst einen ersten Halter 10, der als Kugelkalotte ausgeführt ist. An diesem domförmigen ersten Halter 10 ist unmittelbar lediglich eine einzige MTF-Messvorrichtung 20 zentral befestigt, welche eine On-Axis-Messung durchführt. Die zugehörige Rändelschraube 28, mit der diese MTF-Messvorrichtung 20 an dem domförmigen ersten Halter 10 befestigt ist, ist in Fig. 12 zentral an dem ersten Halter 10 sichtbar. Die übrigen MTF-Messvorrichtungen 20 sind an dem zweiten Halter 12 befestigt, welcher in Form einer Vielzahl von Bügeln 30 ausgeführt ist. Diese Bügel 30 sind über zylinderförmige Verbindungsstücke 32 an dem domförmigen ersten Halter 10 befestigt.

Die Bügel 30, aus dem der zweite Halter 12 aufgebaut ist, erstrecken sich entlang von Großkreisen der zweiten Kugelschale ausgehend von einem ersten Ende 34 in Richtung eines distalen freien Endes 36. Die Bügel 30 sind an ihren ersten Enden 34 jeweils über die Verbindungsstücke 32 mit dem ersten Halter 10 verbunden. Der zweite Halter 12, aufgebaut aus Bügeln 30, ist insofern flexibel, als die Verbindung zu dem ersten Halter 10 entlang der in dem ersten Halter 10 vorhandenen Langlöcher 22 entlang eines Großkreises verändert werden kann. So kann beispielsweise der Bügel 30a näher am Zentrum des ersten Halters 10 befestigt werden, ein weiterer Bügel 30b kann weiter am Rand des ersten Halters 10 befestigt werden. Die MTF-Messvorrichtungen 20 sind ebenfalls justierbar an den Bügeln 30 befestigt. Zu diesem Zweck sind auch die Bügel 30 mit Langlöchern 22 versehen, die in Richtung einer Längserstreckungsrichtung des jeweiligen Bügels 30 verlaufen.

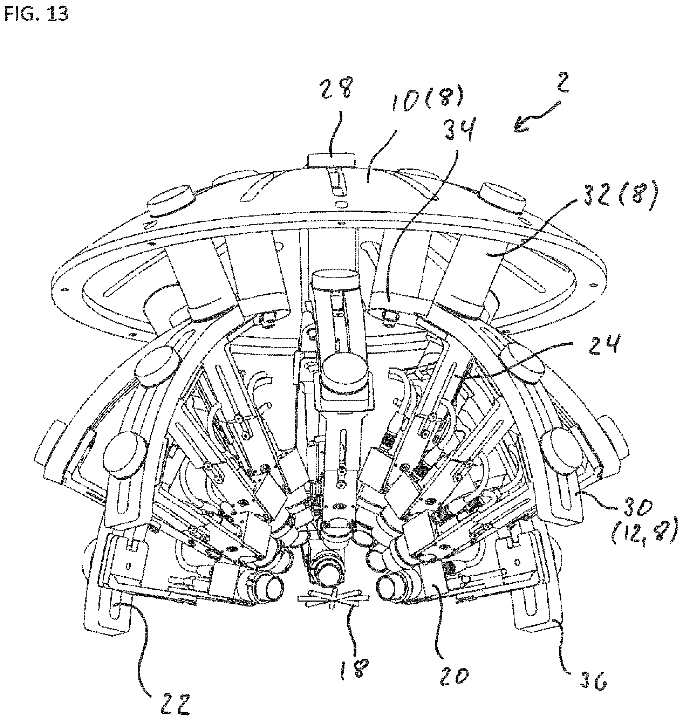

Fig. 13 zeigt die Vorrichtung 2 gemäß dem dritten Ausführungsbeispiel in einer weiteren schematischen und vereinfachten perspektivischen Ansicht mehr von der Unterseite her. Die MTF-Messvorrichtungen 20 sind allesamt derart ausgerichtet, dass sich ihre optischen Achsen in dem Kugelzentrum 18 schneiden, welches wiederum in einer Öffnungsapertur eines zu prüfenden optischen Systems 4 liegen kann. Das optische System 4 ist aus Gründen der Übersichtlichkeit nicht dargestellt. Das gezeigte Ausführungsbeispiel ist vor allem zur Prüfung von optischen Systemen 4 mit extrem großen Bildwinkeln geeignet. Es können MTF-Messungen über einen sehr großen Bildwinkelbereich aufgenommen werden.

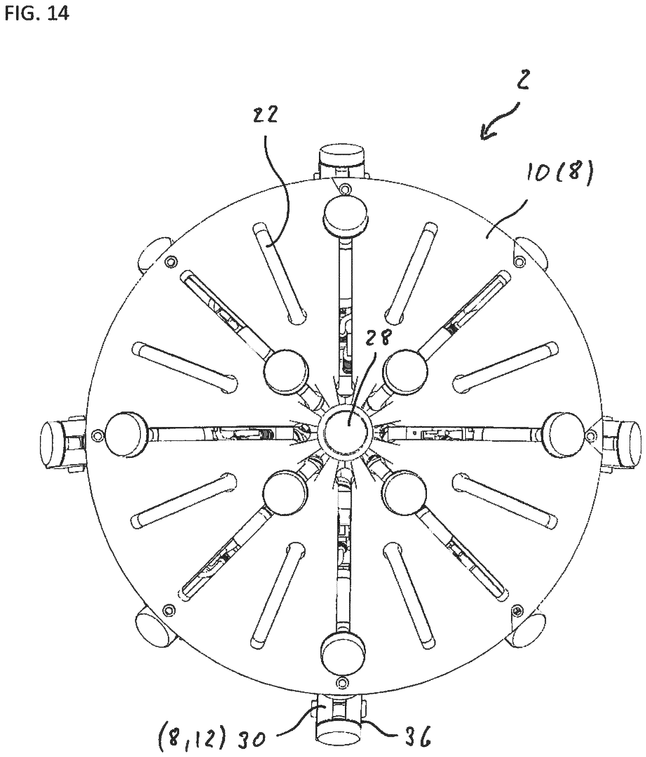

Fig. 14 zeigt diese Vorrichtung 2 in einer Draufsicht auf deren Oberseite. Erkennbar sind die kompakten Abmessungen der Vorrichtung 2. Der aus den Bügeln 30 aufgebaute zweite Halter 12 ragt lediglich geringfügig über den äußeren Rand des ersten Halters 10 hinaus, es sind lediglich die freien Enden 36 der Bügel 30 sichtbar. Gut erkennbar sind die in dem ersten Halter 10 vorhandenen Langlöcher 22, welche sternförmig von der Mitte des Halters 10 in Richtung von dessen Rand verlaufen und entlang derer die Bügel 30 des zweiten Halters 12 verschiebbar sind.

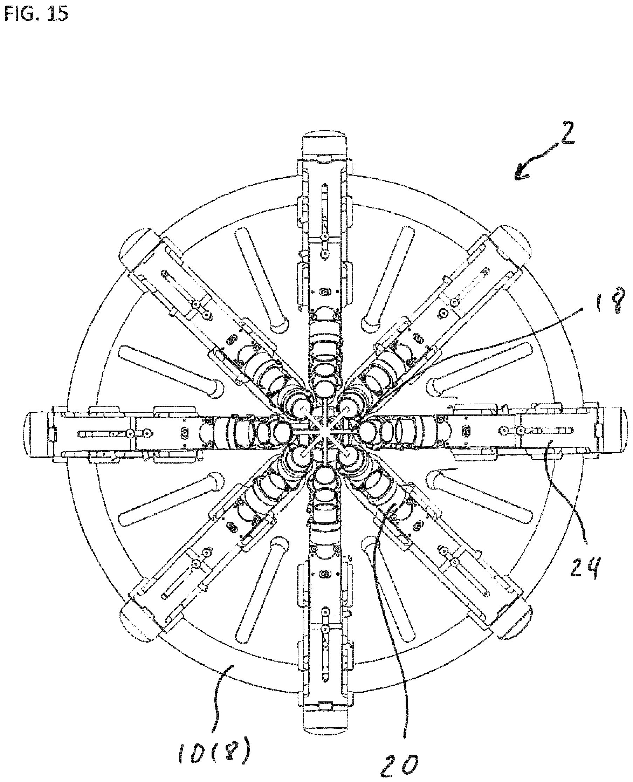

Fig. 15 zeigt die Vorrichtung 2 von der Unterseite her. An den Bügeln 30 des zweiten Halters 12 sind abwechselnd jeweils drei bzw. zwei MTF-Messvorrichtungen 20 angebracht. Alle MTF-Messvorrichtungen 20 sind auf das Kugelzentrum 18 gerichtet. Zentral befindet sich die MTF-Messvorrichtung 20 zur Durchführung der On-Axis-Messung.

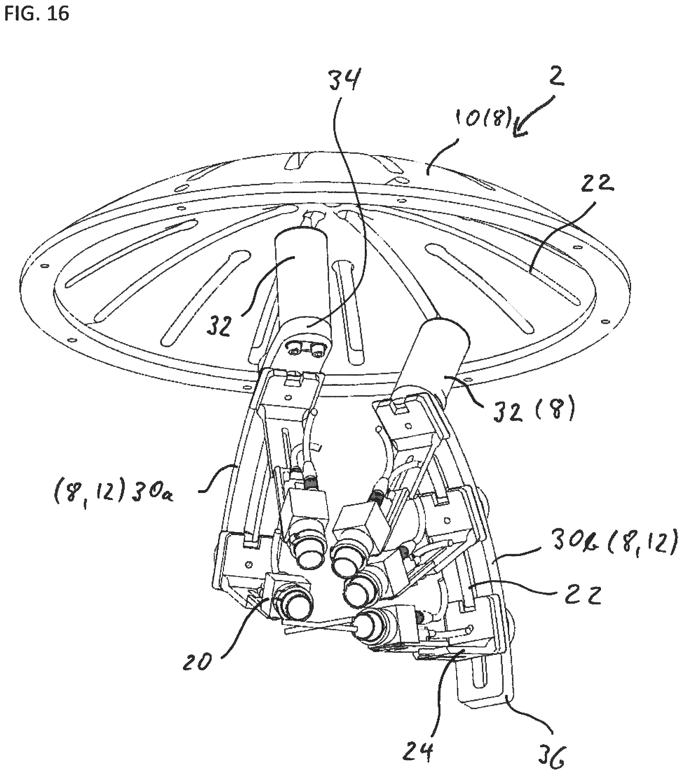

Fig. 16 zeigt die Vorrichtung 2 gemäß dem dritten Ausführungsbeispiel in einer schematisch vereinfachten perspektivischen Ansicht, wobei von dem zweiten Halter 12 lediglich zwei Bügel 30 dargestellt sind. Ein erster Bügel 30a, welcher über das Verbindungsstück 32 relativ zentral an dem ersten Halter 10 aufgenommen ist, nimmt beispielhaft zwei MTF-Messvorrichtungen 20 auf. Der zweite Bügel 30b, welcher über sein Verbindungsstück 32 relativ weit außen an dem ersten Halter 10 angebracht ist, nimmt beispielhaft drei MTF-Messvorrichtungen 20 auf. Die MTF-Messvorrichtungen 20 sind, wie bereits im Kontext der übrigen Ausführungsbeispiele beschrieben, mit entsprechenden Kamerahaltern 24 an dem zweiten Halter 12, gebildet durch die Bügel 30 und die Verbindungsstücke 32, befestigt.

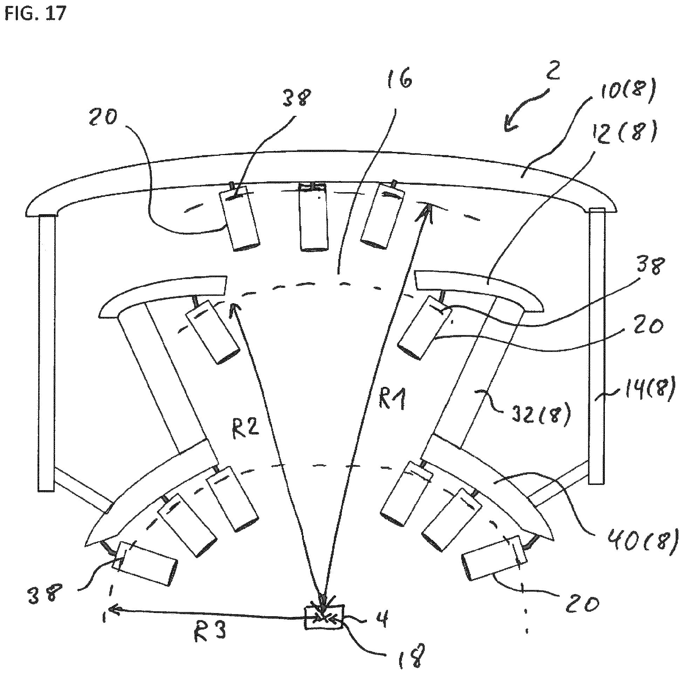

Fig. 17 zeigt in einer stark schematisierten und vereinfachten Schnittansicht eine weitere Vorrichtung 2 zum Messen von Abbildungseigenschaften eines refraktiven optischen Systems 4, gemäß einem vierten Ausführungsbeispiel. Diese Vorrichtung 2 umfasst einen ersten Halter 10, welcher wiederum als Kugelkalotte ausgeführt ist. Dieser ist dazu eingerichtet, die MTF-Messvorrichtungen 20 einer ersten Gruppe auf einer Kugelschale mit einem ersten Radius R1 zu befestigen. Insbesondere sind die Bildsensoren 38 der als MTF-Messvorrichtung 20 eingesetzten Kameras auf dieser ersten Kugelschale angeordnet. Die Vorrichtung 2 umfasst ferner einen zweiten Halter 12, welcher ringförmig ausgestaltet ist und zentral eine Öffnung 16 aufweist. Dieser ist dazu eingerichtet, MTF-Messvorrichtungen 20 einer zweiten Gruppe auf einer Kugelschale mit einem zweiten Radius R2 zu halten. Wiederum sind die Bildsensoren 38 dieser MTF-Messvorrichtungen 20 auf dieser zweiten Kugelschale angeordnet. Die Vorrichtung 2 umfasst ferner einen dritten Halter 40, welcher MTF-Messvorrichtungen 20 einer dritten Gruppe so angeordnet hält, dass sich deren Bildsensoren 38 auf einer dritten Kugelschale mit einem dritten Radius R3 befinden. Es gilt R3 ≤ R2 ≤ R1.

### Bezugszeichenliste

- 2: Vorrichtung
- 4: optisches System
- 6: Prüflingshalter
- 8: Haltevorrichtung
- 10: erster Halter
- 12: zweiter Halter
- 14: Streben
- 16: Öffnung
- 18: Kugelzentrum
- 20: MTF-Messvorrichtung
- 201: MTF-Messvorrichtung erste Gruppe
- 202: MTF-Messvorrichtung zweite Gruppe
- 203: On-Axis-MTF-Messvorrichtung
- 22: Langloch
- 24: Kamerahalter
- 26: optische Achse
- 261: erste optische Achse
- 262: zweite optische Achse
- 263: optische Achse des optischen Systems
- 28: Rändelschraube
- 30: Bügel
- 30, 30b: Bügel
- 32: Verbindungsstück
- 34: erstes Ende
- 36: freies Ende
- 38: Bildsensoren
- 40: dritter Halter

- α1: erster Winkel
- α2: zweiter Winkel
- R1: erster Radius
- R2: zweiter Radius
- R3: dritter Radius

## Patentansprüche

1. Vorrichtung (2) zum Messen von Abbildungseigenschaften eines optischen Systems (4), wobei die Vorrichtung (2) umfasst:
einen Prüflingshalter (6), welcher dazu eingerichtet ist, das zu prüfende optische System (4) an einer vorgegebenen Prüfposition zu positionieren, eine starre Haltevorrichtung (8) und eine Mehrzahl von MTF-Messvorrichtungen (20), die derart an fest vorgebbaren Positionen der Haltevorrichtung (8) angeordnet sind, dass mit jeder der MTF-Messvorrichtungen (20) eine Modulationstransferfunktion an jeweils voneinander verschiedenen ebenfalls fest vorgebbaren Winkellage im Bildfeld des optischen Systems (4) messbar ist, **dadurch gekennzeichnet, dass**
die Haltevorrichtung (8) zumindest einen ersten und einen zweiten Halter (10, 12) umfasst und die Mehrzahl von MTF-Messvorrichtungen (20) eine erste und eine zweite Gruppe von MTF-Messvorrichtungen (20) umfasst, wobei
der erste Halter (10) dazu eingerichtet ist, die MTF-Messvorrichtungen (20) der ersten Gruppe an ersten Positionen zu halten, so dass die MTF-Messvorrichtungen (20) der ersten Gruppe auf einer ersten Kugelschale angeordnet sind,
der zweite Halter (12) dazu eingerichtet ist, die MTF-Messvorrichtungen (20) der zweiten Gruppe an zweiten Positionen zu halten, so dass die MTF-Messvorrichtungen (20) der zweiten Gruppe auf einer zweiten Kugelschale angeordnet sind, wobei die erste und die zweite Kugelschale unterschiedliche Radien haben und konzentrisch zueinander angeordnet sind.

2. Vorrichtung (2) nach Anspruch 1, **dadurch gekennzeichnet, dass** die MTF-Messvorrichtungen (20) derart an der Halterung (8) angeordnet sind, dass sich die optischen Achsen der MTF-Messvorrichtungen (20) in einer Ebene einer Apertur des zu prüfenden optischen Systems (4) schneiden.

3. Vorrichtung (2) nach Anspruch 1 oder 2, **dadurch gekennzeichnet, dass** die Haltevorrichtung (8) einen dritten Halter (40) umfasst und die Mehrzahl von MTF-Messvorrichtungen die erste und zweite Gruppe und zusätzlich eine dritte Gruppe von MTF-Messvorrichtungen umfasst, wobei der dritte Halter (40) dazu eingerichtet ist, die MTF-Messvorrichtungen der dritten Gruppe an dritten Positionen zu halten, so dass die MTF-Messvorrichtungen der dritten Gruppe auf einer dritten Kugelschale angeordnet sind, wobei die dritte Kugelschale einen von dem ersten und zweiten verschiedenen dritten Radius hat und konzentrisch zu der ersten und zweiten Kugelschale angeordnet ist.

4. Vorrichtung (2) nach einem der Ansprüche 1 bis 3, **dadurch gekennzeichnet, dass** der erste Radius der ersten Kugelschale größer ist als der zweite Radius der zweiten Kugelschale und insbesondere der zweite Radius der zweiten Kugelschale größer ist als der dritte Radius der dritten Kugelschale, so dass die MTF-Messvorrichtungen (20) der ersten Gruppe jeweils eine größere Entfernung zu dem zu prüfenden optischen System (4) aufweisen als die MTF-Messvorrichtungen (20) der zweiten Gruppe und insbesondere die MTF-Messvorrichtungen (20) der zweiten Gruppe jeweils eine größere Entfernung zu dem zu prüfenden optischen System (4) aufweisen als die MTF-Messvorrichtungen (20) der dritten Gruppe.

5. Vorrichtung (2) nach einem der Ansprüche 1 bis 4, **dadurch gekennzeichnet, dass** für alle MTF-Messvorrichtungen (201) der ersten Gruppe ein erster Lateralwinkel (α1) zwischen einer optischen Achse (263) des zu prüfenden optischen Systems (4) und einer optischen Achse (261) der MTF-Messvorrichtung (201) kleiner ist als ein zweiter Lateralwinkel (α2) zwischen der optischen Achse (263) des zu prüfenden optischen Systems (4) und einer optischen Achse (262) einer beliebigen MTF-Messvorrichtung (202) der zweiten Gruppe und insbesondere für alle MTF-Messvorrichtungen (202) der zweiten Gruppe ein zweiter Lateralwinkel zwischen einer optischen Achse (262) des zu prüfenden optischen Systems (4) und einer optischen Achse der MTF-Messvorrichtung kleiner ist als ein Lateralwinkel zwischen der optischen Achse (263) des zu prüfenden optischen Systems (4) und einer optischen Achse einer beliebigen MTF-Messvorrichtung der dritten Gruppe.

6. Vorrichtung (2) nach einem der Ansprüche 1 bis 5, **dadurch gekennzeichnet, dass** ein Lateralwinkel zwischen zwei benachbart angeordneten MTF-Messvorrichtungen (20) der ersten Gruppe, kleiner ist als ein Lateralwinkel zwischen zwei benachbart angeordneten MTF-Messvorrichtungen (20) der zweiten Gruppe und insbesondere der zweite Lateralwinkel kleiner ist als ein dritter Lateralwinkel zwischen zwei benachbart angeordneten MTF-Messvorrichtungen der dritten Gruppe.

7. Vorrichtung (2) nach einem der Ansprüche 1 bis 6, **dadurch gekennzeichnet, dass** sich die Halter (10, 12) der Haltevorrichtung (8) zumindest abschnittsweise entlang der entsprechenden Kugelschale erstrecken.

8. Vorrichtung (2) nach einem der Ansprüche 1 bis 7, **dadurch gekennzeichnet, dass** der erste Halter (10) als Kugelkalotte ausgeführt ist und der zweite und/oder der dritte Halter (12, 40) als Kugelkalotte mit einer zentralen Öffnung (16) ausgeführt sind/ist, wobei insbesondere der zweite und/oder der dritte Halter (12, 40) ringförmig sind/ist, und wobei ferner insbesondere der zweite und/oder der dritte Halter (12, 40) in Form einer Kugelzone ausgeführt sind/ist.

9. Vorrichtung (2) nach einem der Ansprüche 1 bis 8, **dadurch gekennzeichnet, dass** der erste Halter (10) als Kugelkalotte ausgeführt ist und der zweite und/oder der dritte Halter (12, 40) jeweils als zumindest ein Bügel (30) ausgeführt sind/ist, wobei die Bügel (30) jeweils an einem dem ersten Halter (10) nahen ersten Ende (34) an dem ersten Halter (10) befestigt sind und sich entlang von Großkreisen der ersten bzw. zweiten Kugelschale in Richtung eines distalen freien Endes (36) erstrecken, wobei die Großkreise innerhalb von Ebenen verlaufen, die sich entlang einer optischen Achse des zu prüfenden optischen Systems (4) schneiden.

10. Vorrichtung (2) nach einem der Ansprüche 1 bis 9, **dadurch gekennzeichnet, dass** die Halter (10) der Haltevorrichtung (8) derart eingerichtet sind, dass eine Verschiebung der MTF-Messvorrichtungen (20) auf der zugehörigen Kugelschale möglich ist.

11. Verfahren zum Messen von Abbildungseigenschaften eines optischen Systems (4) mit einer Vorrichtung (2) nach einem der Ansprüche 1 bis 10, die folgenden Schritte umfassend:
Anordnen des zu prüfenden optischen Systems (4) in dem Prüflingshalter (6),
simultanes Durchführen von MTF-Messungen mit allen MTF-Messvorrichtungen (20).

## Claims

1. Device (2) for measuring imaging properties of an optical system (4), wherein the device (2) comprises: a test-object holder (6), which is configured to position the optical system (4) to be tested at a predefined testing position, a rigid holding device (8), and a plurality of MTF measuring devices (20), which are arranged at firmly predefinable positions of the holding device (8) such that, by means of each of the MTF measuring devices (20), a modulation transfer function can be measured at respective different, likewise firmly predefinable, angular positions in the image field of the optical system (4), **characterized in that** the holding device (8) comprises at least a first and a second holder (10, 12), and the plurality of MTF measuring devices (20) comprises a first and a second group of MTF measuring devices (20), wherein the first holder (10) is configured to hold the MTF measuring devices (20) of the first group at first positions so that the MTF measuring devices (20) of the first group are arranged on a first spherical shell, the second holder (12) is configured to hold the MTF measuring devices (20) of the second group at second positions so that the MTF measuring devices (20) of the second group are arranged on a second spherical shell, wherein the first and the second spherical shells have different radii and are arranged so as to be mutually concentric.

2. Device (2) according to claim 1, **characterized in that** the MTF measuring devices (20) are arranged on the holding device (8) in such a way that the optical axes of the MTF measuring devices (20) intersect in a plane of an aperture of the optical system (4) to be tested.

3. Device (2) according to either claim 1 or 2, **characterized in that** the holding device (8) comprises a third holder (40) and the plurality of MTF measuring devices comprises the first and second group and additionally a third group of MTF measuring devices, wherein the third holder (40) is configured to hold the MTF measuring devices of the third group at third positions so that the MTF measuring devices of the third group are arranged on a third spherical shell, wherein the third spherical shell has a third radius that is different from the first and second radii and is arranged so as to be concentric to the first and second spherical shell.

4. Device (2) according to any of claims 1 to 3, **characterized in that** the first radius of the first spherical shell is greater than the second radius of the second spherical shell, and in particular the second radius of the second spherical shell is greater than the third radius of the third spherical shell, such that the MTF measuring devices (20) of the first group have in each case a greater distance from the optical system (4) to be tested than the MTF measuring devices (20) of the second group, and in particular the MTF measuring devices (20) of the second group have in each case a greater distance from the optical system (4) to be tested than the MTF measuring devices (20) of the third group.

5. Device (2) according to any of claims 1 to 4, **characterized in that**, for all the MTF measuring devices (201) of the first group, a first lateral angle (α1) between an optical axis (263) of the optical system (4) to be tested and an optical axis (261) of the MTF measuring device (201) is smaller than a second lateral angle (α2) between the optical axis (263) of the optical system (4) to be tested and an optical axis (262) of any MTF measuring device (202) of the second group, and in particular for all the MTF measuring devices (202) of the second group a second lateral angle between an optical axis (262) of the optical system (4) to be tested and an optical axis of the MTF measuring device is smaller than a lateral angle between the optical axis (263) of the optical system (4) to be tested and an optical axis of any MTF measuring device of the third group.

6. Device (2) according to any of claims 1 to 5, **characterized in that** a lateral angle between two adjacently arranged MTF measuring devices (20) of the first group is smaller than a lateral angle between two adjacently arranged MTF measuring devices (20) of the second group, and in particular the second lateral angle is smaller than a third lateral angle between two adjacently arranged MTF measuring devices of the third group.

7. Device (2) according to any of claims 1 to 6, **characterized in that** the holders (10, 12) of the holding device (8) extend, at least in portions, along the corresponding spherical shell.

8. Device (2) according to any of claims 1 to 7, **characterized in that** the first holder (10) is configured as a spherical cap, and the second and/or the third holder (12, 40) is/are configured as a spherical cap having a central opening (16), wherein in particular the second and/or the third holder (12, 40) is/are annular, and wherein more particularly the second and/or the third holder (12, 40) is/are configured in the form of a spherical zone.

9. Device (2) according to any of claims 1 to 8, **characterized in that** the first holder (10) is configured as a spherical cap and the second and/or the third holder (12, 40) is/are configured in each case as at least one bracket (30), wherein the brackets (30) are in each case fastened to the first holder (10) at a first end (34) close to the first holder (10) and extend along great circles of the first or second spherical shell in the direction of a distal free end (36), wherein the great circles extend within planes that intersect along an optical axis of the optical system (4) to be tested.

10. Device (2) according to any of claims 1 to 9, **characterized in that** the holders (10) of the holding device (8) are configured in such a way that a displacement of the MTF measuring devices (20) on the associated spherical shell is possible.

11. Method for measuring imaging properties of an optical system (4) using a device (2) according to any of claims 1 to 10, comprising the following steps: arranging the optical system (4) to be tested in the test-object holder (6), simultaneously carrying out MTF measurements using all the MTF measuring devices (20).

## Revendications

1. Dispositif (2) permettant de mesurer les propriétés d'imagerie d'un système optique (4), le dispositif (2) comprenant :
un support d'objet de test (6), qui est conçu pour positionner, à une position de test prédéfinie, le système optique (4) à tester, un dispositif de maintien rigide (8) et une pluralité de dispositifs de mesure MTF (20), qui sont disposés à des positions pouvant être prédéfinies de manière fixe, du dispositif de maintien (8), de telle sorte que, au moyen de chacun des dispositifs de mesure MTF (20), une fonction de transfert de modulation puisse être mesurée à des positions angulaires respectives différentes, pouvant également être prédéfinies de manière fixe, dans le champ d'image du système optique (4), **caractérisé en ce que**
le dispositif de maintien (8) comprend au moins un premier et un deuxième support (10, 12) et **en ce que** la pluralité de dispositifs de mesure MTF (20) comprend un premier et un deuxième groupe de dispositifs de mesure MTF (20),
le premier support (10) étant conçu pour maintenir les dispositifs de mesure MTF (20) du premier groupe à des premières positions de telle sorte que les dispositifs de mesure MTF (20) du premier groupe soient disposés sur une première coque sphérique,
le deuxième support (12) étant conçu pour maintenir les dispositifs de mesure MTF (20) du deuxième groupe à des deuxièmes positions de telle sorte que les dispositifs de mesure MTF (20) du deuxième groupe soient disposés sur une deuxième coque sphérique, les première et deuxième coques sphériques ayant des rayons différents et étant disposées de manière mutuellement concentrique.

2. Dispositif (2) selon la revendication 1, **caractérisé en ce que** les dispositifs de mesure MTF (20) sont disposés sur le dispositif de maintien (8) de telle sorte que les axes optiques des dispositifs de mesure MTF (20) se coupent dans un plan d'une ouverture du système optique (4) à tester.

3. Dispositif (2) selon la revendication 1 ou 2, **caractérisé en ce que** le dispositif de maintien (8) comprend un troisième support (40) et **en ce que** la pluralité de dispositifs de mesure MTF comprend les premier et deuxième groupes et, en outre, un troisième groupe de dispositifs de mesure MTF, le troisième support (40) étant conçu pour maintenir les dispositifs de mesure MTF du troisième groupe à des troisièmes positions de telle sorte que les dispositifs de mesure MTF du troisième groupe soient disposés sur une troisième coque sphérique, la troisième coque sphérique ayant un troisième rayon différent des premier et deuxième rayons et étant disposée de manière concentrique par rapport aux première et deuxième coques sphériques.

4. Dispositif (2) selon l'une quelconque des revendications 1 à 3, **caractérisé en ce que** le premier rayon de la première coque sphérique est supérieur au deuxième rayon de la deuxième coque sphérique et en particulier **en ce que** le deuxième rayon de la deuxième coque sphérique est supérieur au troisième rayon de la troisième coque sphérique de telle sorte que les dispositifs de mesure MTF (20) du premier groupe présentent respectivement une distance plus élevée par rapport au système optique (4) à tester que les dispositifs de mesure MTF (20) du deuxième groupe et en particulier, que les dispositifs de mesure MTF (20) du deuxième groupe présentent respectivement une distance plus élevée par rapport au système optique (4) à tester que les dispositifs de mesure MTF (20) du troisième groupe.

5. Dispositif (2) selon l'une quelconque des revendications 1 à 4, **caractérisé en ce que**, pour tous les dispositifs de mesure MTF (201) du premier groupe, un premier angle latéral (α1) entre un axe optique (263) du système optique (4) à tester et un axe optique (261) du dispositif de mesure MTF (201) est inférieur à un deuxième angle latéral (α2) entre l'axe optique (263) du système optique (4) à tester et un axe optique (262) d'un dispositif de mesure MTF (202) quelconque du deuxième groupe, et en particulier **en ce que**, pour tous les dispositifs de mesure MTF (202) du deuxième groupe, un deuxième angle latéral entre un axe optique (262) du système optique (4) à tester et un axe optique du dispositif de mesure MTF est inférieur à un angle latéral entre l'axe optique (263) du système optique (4) à tester et un axe optique d'un dispositif de mesure MTF quelconque du troisième groupe.

6. Dispositif (2) selon l'une quelconque des revendications 1 à 5, **caractérisé en ce qu'**un angle latéral entre deux dispositifs de mesure MTF (20), disposés de manière adjacente, du premier groupe, est inférieur à un angle latéral entre deux dispositifs de mesure MTF (20), disposés de manière adjacente, du deuxième groupe, et en particulier **en ce que** le deuxième angle latéral est inférieur à un troisième angle latéral entre deux dispositifs de mesure MTF, disposés de manière adjacente, du troisième groupe.

7. Dispositif (2) selon l'une quelconque des revendications 1 à 6, **caractérisé en ce que** les supports (10, 12) du dispositif de maintien (8) s'étendent au moins par sections le long de la coque sphérique correspondante.

8. Dispositif (2) selon l'une quelconque des revendications 1 à 7, **caractérisé en ce que** le premier support (10) est réalisé sous forme de calotte sphérique et **en ce que** le deuxième et/ou le troisième support (12, 40) est/sont réalisé(s) sous forme de calotte sphérique avec une ouverture centrale (16), le deuxième et/ou le troisième support (12, 40) étant en particulier annulaire(s), et en outre, le deuxième et/ou le troisième support (12, 40) étant en particulier réalisé(s) sous forme de zone sphérique.

9. Dispositif (2) selon l'une quelconque des revendications 1 à 8, **caractérisé en ce que** le premier support (10) est réalisé sous forme de calotte sphérique et **en ce que** le deuxième et/ou le troisième support (12, 40) sont respectivement réalisés sous forme d'au moins un étrier (30), les étriers (30) étant respectivement fixés au premier support (10) à une première extrémité (34) proche du premier support (10) et s'étendant le long de grands cercles de la première ou de la deuxième coque sphérique en direction d'une extrémité distale libre (36), les grands cercles se prolongeant à l'intérieur de plans qui se coupent le long d'un axe optique du système optique (4) à tester.

10. Dispositif (2) selon l'une quelconque des revendications 1 à 9, **caractérisé en ce que** les supports (10) du dispositif de maintien (8) sont conçus de manière à permettre un déplacement des dispositifs de mesure MTF (20) sur la coque sphérique associée.

11. Procédé permettant de mesurer des caractéristiques d'imagerie d'un système optique (4) au moyen d'un dispositif (2) selon l'une quelconque des revendications 1 à 10, comprenant les étapes suivantes :
la mise en place du système optique (4) à tester dans le support d'objet de test (6),
la mise en œuvre simultanée de mesures MTF au moyen de tous les dispositifs de mesure MTF (20).
